# EUROPEAN PATENT APPLICATION

(11) **EP 3 562 150 A1**
(43) Date of publication of application: **30.10.2019**
(21) Application number: 19168346.5
(22) Date of filing: 10.04.2019
(51) Int. Cl.: H04N 7/18, H04M 11/02

(54) **INTERCOM SYSTEM**

(30) Priority: 24.04.2018 JP 2018083506; 24.04.2018 JP 2018083505; 25.04.2018 JP 2018084542
(71) Applicant: Panasonic Intellectual Property Management Co., Ltd., Osaka-shi, Osaka 540-6207 (JP)
(72) Inventor: HASHIMOTO, Takanori, Osaka, Osaka 540-6207 (JP)
(74) Representative: Appelt, Christian W.

(57) **Abstract**

The present disclosure provides an intercom system with the ability to change the timing to start capturing an image of a visitor depending on the intended purpose and to set the timing to use the image for other purposes. An intercom system (1) includes a first setting unit (101) to set at least one of a trigger condition for making an image capturing unit (11) of a lobby intercom station (10) start capturing an image or a trigger condition for starting processing using the image captured by the image capturing unit (11). An intercom system (1) with such a configuration makes the image capturing unit (11) set a trigger condition for starting capturing an image, thus allowing the timing to start capturing an image to be changed depending on the trigger condition.

## Description

### Technical Field

The present disclosure generally relates to an intercom system (also called an "intercommunication system"), and more particularly relates to an intercom system with an image capturing unit.

### Background Art

An intercom system, including an intercom slave unit with an image capture device such as a camera and an intercom master station for displaying, when a visitor initiates a call, an image (which may be a still image or a moving image) captured by the image capture device, has been known (see, for example, JP 2015-111935 A (hereinafter referred to as D1)).

Using the intercom system of Dl allows a resident (inhabitant) of a house to monitor the visitor's behavior.

Recently, such an image captured by the image capture device may be used for not only calling the resident up but also other purposes as well. In the latter case, however, it is necessary to change the timing to start capturing the image depending on the intended purpose or set the timing to use the image for other purposes.

### Summary

The present disclosure provides an intercom system with the ability to change the timing to start capturing an image of a visitor depending on the intended purpose and to set the timing to use the image for other purposes.

An intercom system according to an aspect of the present disclosure includes a condition setting unit configured to set at least one of a trigger condition for making an image capturing unit of an intercom doorphone start capturing an image or a trigger condition for starting processing using the image captured by the image capturing unit.

### Brief Description of Drawings

FIG. 1 is a block diagram illustrating a configuration for an intercom system according to a first embodiment;
FIG. 2 depicts an exemplary installation of a lobby intercom station and a sensor device in the intercom system;
FIG. 3 is a flowchart showing an exemplary procedure of operation of the intercom system;
FIG. 4 is a flowchart showing another exemplary procedure of operation of the intercom system;
FIG. 5 is a flowchart showing an exemplary procedure in which a server operates according to the first embodiment;
FIG. 6 is a block diagram illustrating a configuration for an intercom system according to a second embodiment;
FIG. 7 illustrates an exemplary appearance of an intercom slave unit that forms part of the intercom system;
FIG. 8 is a flowchart showing an exemplary procedure of the processing performed by the intercom slave unit in response to a call operation;
FIG. 9 is a flowchart showing an exemplary procedure of an image capturing unit's zoom power reset processing performed by the intercom slave unit;
FIG. 10 is a block diagram illustrating an exemplary configuration for an intercom system according to a first variation of the second embodiment;
FIG. 11 is a block diagram illustrating an exemplary configuration for an intercom system according to a fifth variation of the second embodiment;
FIG. 12 is a block diagram illustrating an exemplary configuration for an intercom system according to a third embodiment;
FIG. 13 is a sequence chart illustrating how the intercom system operates;
FIG. 14 is a flowchart showing an exemplary procedure in which an intercom master station that forms part of the intercom system performs processing in response to a call operation and in accordance with the result information received from a server; and
FIG. 15 is a block diagram illustrating an exemplary configuration for an intercom master station of an intercom system according to a variation of the third embodiment.

### Description of Embodiments

Note that embodiments and their variations to be described below are only examples of the present disclosure and should not be construed as limiting. Rather, those embodiments and variations may be readily changed, modified, replaced, or combined with any other embodiment, in various manners, depending on a design choice or any other factor, without departing from a true spirit and scope of the present disclosure.

### (First embodiment)

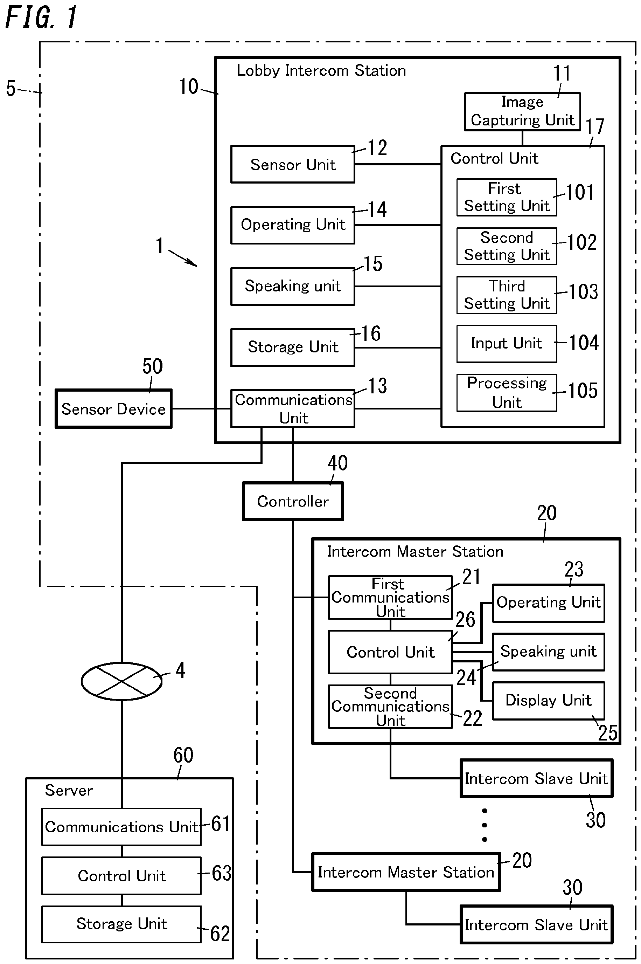

An intercom system 1 and a lobby intercom station 10 according to a first exemplary embodiment will be described with reference to FIGS. 1-5.

### (1) Overview

An intercom system 1 according to an exemplary embodiment includes a lobby intercom station 10, a plurality of (e.g., two in the example illustrated in FIG. 1) intercom master stations 20, a plurality of (e.g., two in the example illustrated in FIG. 1) intercom slave units 30, and a controller 40 as shown in FIG. 1. In the following description of embodiments, a situation where the intercom system 1 is used in a multi-family dwelling house as an exemplary facility 5 will be described as an example.

The lobby intercom station 10 is installed in a common area such as a lobby of a multi-family dwelling house. The multi-family dwelling house includes not only the common area but also a plurality of privately-owned areas (i.e., respective dwelling units). Each intercom master station 20 is installed one by one in an associated one of those privately-owned areas. Each intercom slave unit 30 may be installed, for example, at the doorway of an associated one of the privately-owned areas (dwelling units).

The lobby intercom station 10 and the intercom master stations 20 are configured to be able to communicate with each other via the controller 40. This allows the users of the intercom system 1 according to this embodiment to speak to each other via the lobby intercom station 10 and any of the intercom master stations 20. The lobby intercom station 10 is configured to be able to communicate with a sensor device 50 installed at the main entrance door outside of the common area of the facility 5. In addition, the intercom master stations 20 and the intercom slave units 30 are also configured to be able to communicate with each other.

The lobby intercom station 10 starts capturing an image of the visitor when finding a trigger condition, which has been set in advance as a condition for starting an image capturing operation, satisfied. In response to a call operation performed by the visitor (hereinafter sometimes referred to as a "caller"), the lobby intercom station 10 transmits a control signal (call signal) to call his or her designated resident in a specified privately-owned area to an associated one of the intercom master stations 20 via the controller 40. The lobby intercom station 10 transmits, when finding itself ready to communicate with the associated intercom master station 20 as a result of the operation on the intercom master station 20, audio data of the caller to the intercom master station 20 via the controller 40. On the other hand, the lobby intercom station 10 emits, when receiving audio data of the designated person who is operating the intercom master station 20 (hereinafter referred to as a "responder") via the controller 40, the voice of the responder based on the data received.

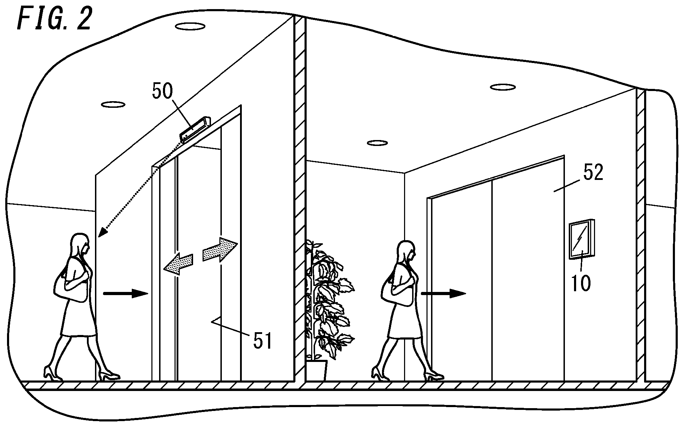

While the intercom master station 20 is receiving the control signal (call signal) from the lobby intercom station 10 (i.e., when the visitor/caller is initiating a call through the lobby intercom station 10), the designated resident in the specified privately-owned area performs either the operation of speaking to the visitor/caller over the lobby intercom station 10 or the operation of unlocking a door 52 at the main entrance of the lobby (see FIG. 2).

The controller 40 transmits, on receiving the control signal (call signal) from the lobby intercom station 10, the control signal (call signal) to the specified intercom master station 20. While the controller 40 is able to communicate with the lobby intercom station 10 and the intercom master station 20, the controller 40 transmits and receives the audio data of the visitor/caller and the audio data of the resident/responder. In addition, the controller 40 also instructs the door 52 at the main entrance of the lobby, for example, to be locked or unlocked in accordance with the operation performed on the intercom master station 20.

Optionally, the lobby intercom station 10 and the controller 40 are connectible to a network 4 such as the Internet via a gateway (not shown). This allows the lobby intercom station 10 and the controller 40 to communicate with the server 60 over the network 4.

In response to a call operation performed by the visitor/caller, the intercom slave unit 30 installed outside of the specified privately-owned area transmits a control signal (call signal) to call his or her designated resident up to an associated one of the intercom master stations 20. The intercom slave unit 30 transmits, when finding itself ready to communicate with the associated intercom master station 20 as a result of the operation on the intercom master station 20, audio data (voice) of the caller to the intercom master station 20. On the other hand, the intercom slave unit 30 emits, when receiving audio data (voice) of the designated person who is operating the intercom master station 20 (hereinafter referred to as a "responder"), the voice of the responder based on the data received.

The sensor device 50 may be a human detection sensor, for example, and transmits the result of detection indicating human presence or absence to the lobby intercom station 10.

The server 60 authenticates, based on the image captured by the lobby intercom station 10, the person that has been shot (who may be, for example, a visitor or the resident who has come home from outside). Then, the server 60 transmits the result of the authentication to the lobby intercom station 10 over the network 4.

The lobby intercom station 10 controls opening and closing the lobby door 52 based on the result of the authentication.

### (2) Configuration

### (2-1) Lobby intercom station

The lobby intercom station 10 includes an image capturing unit 11, a sensor unit 12, a communications unit 13, an operating unit 14, a speaking unit 15, a storage unit 16, and a control unit 17 as shown in FIG. 1.

The lobby intercom station 10 includes a microcomputer including a processor and a memory, for example. That is to say, the microcomputer performs the function of the control unit 17 by making the processor execute a program stored in the memory. The program to be executed by the processor may be stored in advance in the memory of microcomputer. However, this is only an example and should not be construed as limiting. The program may also be stored in a storage medium such as a memory card or downloaded via a telecommunications line such as the Internet.

The image capturing unit 11 may be implemented as a camera including an image capture device such as a charge coupled device (CCD) image sensor, a complementary metal-oxide semiconductor (CMOS) image sensor, or any other two-dimensional image sensor for shooting the subject (such as a visitor). In this embodiment, the image capturing area (view) of the image capturing unit 11 is set in front of the lobby intercom station 10 such that when a caller such as a visitor is operating the lobby intercom station 10, at least his or her face may be shot. In this embodiment, the image capturing unit 11 is a camera for shooting video such as a moving image. However, this is only an example and should not be construed as limiting. The image capturing unit 11 may also be a camera for shooing a still image. Even though the image capturing unit 11 of this embodiment is a camera for shooting a color image, the image capturing unit 11 may also be a camera for shooting a monochrome image as well.

The sensor unit 12 may be a human detection sensor for sensing a person approaching the lobby intercom station 10, for example.

The communications unit 13 includes a communications interface for communicating with the intercom master stations 20 via the controller 40. The communications unit 13 is configured to be able to communicate bidirectionally with the intercom master stations 20 such that an audio signal and a control signal may be transmitted bidirectionally between the lobby intercom station 10 and the intercom master stations 20.

The communications unit 13 further includes a communications interface for communicating with the server 60 over the network 4. The communications unit 13 is configured to communicate with the server 60 bidirectionally such that at least one the images captured by the lobby intercom station 10, information about the images, and information about authentication may be transferred between the lobby intercom station 10 and the server 60.

The communications unit 13 further includes a communications interface for communicating with the sensor device 50.

The operating unit 14 is subjected to the visitor's operation to call his or her designated resident. When a predetermined type of operation (such as pressing a button) is done on the operating unit 14, the operating unit 14 transmits a control signal (call signal) to call the resident in the specified privately-owned area (dwelling unit) to the associated intercom master station 20 via the communications unit 13 and the controller 40.

The speaking unit 15 includes a loudspeaker and a microphone and is configured to communicate with the intercom master stations 20.

The storage unit 16 is implemented as a device selected from the group consisting of a read-only memory (ROM), a random access memory (RAM), an electrically erasable programmable read-only memory (EEPROM), and other storage devices.

The storage unit 16 stores a preset trigger condition. The storage unit 16 stores a plurality of optional purposes, for any of which the image captured by the image capturing unit 11 is intended to be used. The storage unit 16 stores, as the purpose of using the image captured by the image capturing unit 11, an optional purpose that has been selected in advance from the plurality of optional purposes.

The storage unit 16 further stores a plurality of potential destinations, to any of which the image captured by the image capturing unit 11 is intended to be transmitted. In this embodiment, the plurality of potential destinations includes the respective intercom master stations 20 and the server 60. The storage unit 16 stores, as the destination to which the image captured by the image capturing unit 11 is transmitted, the potential destination that has been selected in advance from the plurality of potential destinations, in association with the purpose of using the image captured by the image capturing unit 11.

The control unit 17 includes a first setting unit 101 (condition setting unit), a second setting unit 102 (purpose setting unit), a third setting unit 103 (transmission destination setting unit), an input unit 104, and a processing unit 105 as shown in FIG. 1.

The first setting unit 101 sets a trigger condition for making the image capturing unit 11 start performing an image capturing operation. The trigger condition includes whether or not the input unit 104 has received any command information and the type of the command information. For example, the first setting unit 101 may receive, as a trigger condition, the result of detection by the sensor device 50 (indicating the presence or absence of any human). Alternatively, the first setting unit 101 may receive, as another trigger condition, the call operation among multiple types of operations acceptable for the operating unit 14. Still alternatively, the first setting unit 101 may also receive, as still another trigger condition, whether or not any call operation has been performed. In any case, on receiving the trigger condition, the first setting unit 101 stores the trigger condition in the storage unit 16.

The second setting unit 102 enters (stores), in the storage unit 16, an optional purpose selected from a plurality of optional purposes as the purpose of using the image captured by the image capturing unit 11. For example, if a calling purpose, a first authentication purpose, and a second authentication purpose are stored as optional purposes in the storage unit 16, at least one of these three optional purposes is entered as the purpose of using the image. Note that if a plurality of optional purposes, such as the calling purpose and the first authentication purpose, are set as the purposes of the image, each of these purposes is correlated with a condition for using the image for that purpose. Specifically, the calling purpose may be correlated with a condition that the sensor device 50 (or the sensor unit 12) should detect a human approaching and a condition that an operation should be performed on the operating unit 14 within a predetermined amount of time. The first authentication purpose may be correlated with a condition that the sensor device 50 (or the sensor unit 12) should detect a human approaching and a condition that no operation should be performed on the operating unit 14 within a predetermined amount of time. As used herein, the "calling purpose" refers to using the visitor's image to call his or her designated resident up in the specified privately-owned area. The "first authentication purpose" refers herein to using the image to determine, for authentication, whether or not the person shot in the image is the resident him- or herself (this type of authentication will be hereinafter referred to as "resident authentication"). The "second authentication purpose" refers herein to using the image to determine, for authentication, whether or not the person shot in the image is a preregistered visitor (this type of authentication will be hereinafter referred to as "visitor authentication").

The third setting unit 103 enters (stores) the destination of the image into the storage unit 16 depending on the intended purpose. Specifically, the third setting unit 103 enters (or stores), in the storage unit 16, a potential destination selected from a plurality of potential destinations as the destination of the image captured by the image capturing unit 11. For example, if the intended purpose is the calling purpose, the intercom master station 20 is correlated as the destination of the image with the purpose. On the other hand, if the intended purpose is either the first authentication purpose or the second authentication purpose, the server 60 is correlated as the destination of the image with the purpose. Note that if a plurality of purposes have been entered, the destination may be set on a purpose-by-purpose basis.

The input unit 104 receives the result of detection from each of the sensor device 50 and the sensor unit 12. The input unit 104 also receives information about the operation performed on the operating unit 14 from the operating unit 14.

The processing unit 105 activates the image capturing unit 11 if the result of detection by the sensor device 50 or the sensor unit 12, which has been received by the input unit 104, indicates that the presence of a human has been detected. That is to say, in such a situation, the processing unit 105 starts supplying power to the image capturing unit 11.

In accordance with the command information received by the input unit 104 and the trigger condition stored in the storage unit 16, the processing unit 105 instructs the image capturing unit 11 to start capturing an image when finding the information received by the input unit 104 (i.e., the command information) satisfying the trigger condition.

The processing unit 105 determines the purpose of using the image captured by the image capturing unit 11 in accordance with the condition correlated with each of the purposes stored in the storage unit 16 and the command information received by the input unit 104.

The processing unit 105 transmits, on receiving the image captured by the image capturing unit 11, the image to the destination correlated with the purpose.

When finding the purpose of using the image to be the calling purpose, the processing unit 105 transmits the control signal (call signal) to the associated intercom master station 20 via the communications unit 13 and the controller 40. When receiving the audio data of the visitor (an audio signal) from the microphone of the speaking unit 15 while getting ready to communicate with the intercom master station 20, the processing unit 105 transmits the audio signal received to the intercom master station 20. On the other hand, when receiving the audio data of the resident (an audio signal) from the intercom master station 20 while getting ready to communicate with the intercom master station 20, the processing unit 105 transmits the audio signal received to the loudspeaker of the speaking unit 15. At this time, the loudspeaker emits the voice of the resident based on the audio signal received.

When finding the purpose of using the image to be the first authentication purpose (or the second authentication purpose), the processing unit 105 transmits the image itself along with data about the intended use of the image to the server 60, and then receives the result of authentication from the server 60. The processing unit 105 controls the operation of opening and closing the door 52 in the common area in accordance with the result of the authentication. Specifically, if the authentication has been done successfully, the processing unit 105 transmits an unlocking signal to open the door 52 in the common area to the controller 40. On the other hand, if the authentication has failed, then the processing unit 105 does not transmit an unlocking signal to open the door 52 in the common area to the controller 40. That is to say, in that case, the processing unit 105 keeps the door 52 closed in the common area.

### (2-2) Intercom master station

The intercom master station 20 includes a first communications unit 21, a second communications unit 22, an operating unit 23, a speaking unit 24, a display unit 25, and a control unit 26 as shown in FIG. 1.

The intercom master station 20 includes a microcomputer including a processor and a memory, for example. That is to say, the microcomputer performs the function of the control unit 26 by making the processor execute a program stored in the memory. The program to be executed by the processor may be stored in advance in the memory of microcomputer. However, this is only an example and should not be construed as limiting. The program may also be stored in a storage medium such as a memory card or downloaded via a telecommunications line such as the Internet.

The first communications unit 21 is a communications interface to communicate with the controller 40. The first communications unit 21 is connected to the lobby intercom station 10 via the controller 40. For example, the first communications unit 21 may receive an image transmitted from the lobby intercom station 10. In addition, the first communications unit 21 is configured to be able to communicate bidirectionally with the lobby intercom station 10 such that an audio signal and the control signal may be transmitted bidirectionally between the intercom master station 20 and the lobby intercom station 10.

The second communications unit 22 is a communications interface to communicate with an associated intercom slave unit 30. The second communications unit 22 may be electrically connected to the intercom slave unit 30 through a two-wire transmission line such as a twisted pair of wires.

The operating unit 23 accepts an operation done by the resident in the privately-owned area. When a predetermined type of operation is done on the operating unit 23 while the first communications unit 21 is receiving a control signal (call signal) to call the resident from the lobby intercom station 10, the intercom master station 20 gets ready to communicate with the lobby intercom station 10. In this embodiment, the predetermined operation may be pressing the button, for example. When the operation of unlocking the door 52 in the common area is performed while the first communications unit 21 is receiving the call signal from the lobby intercom station 10 or is ready to communicate with the lobby intercom station 10, an unlocking signal is transmitted to the controller 40.

Doing a predetermined type of operation (such as pressing the button) on the operating unit 23 while the second communications unit 22 is receiving the control signal (call signal) to call the resident from the intercom slave unit 30 allows the intercom master station 20 to communicate with the intercom slave unit 30.

The speaking unit 24 includes a loudspeaker and a microphone, and is configured to communicate with the lobby intercom station 10 and the intercom slave units 30.

The display unit 25 displays an image transmitted from the lobby intercom station 10 or an image transmitted from the associated intercom slave unit 30.

On receiving the control signal (call signal) and the image captured by the image capturing unit 11 from the lobby intercom station 10 via the first communications unit 21, the control unit 26 outputs audio data representing a ringing tone to the loudspeaker of the speaking unit 24 and also outputs the image received to the display unit 25. In this manner, the control unit 26 makes the loudspeaker of the speaking unit 24 emit the ringing tone and also makes the display unit 25 display a first image thereon.

On receiving the control signal (call signal) from the intercom slave unit 30 via the second communications unit 22, the control unit 26 makes the loudspeaker of the speaking unit 24 emit the ringing tone.

### (2-3) Intercom slave unit

The intercom slave unit 30 includes a microcomputer including a processor and a memory, for example. That is to say, the microcomputer performs the function of the intercom slave unit 30 by making the processor execute a program stored in the memory. The program to be executed by the processor may be stored in advance in the memory of microcomputer. However, this is only an example and should not be construed as limiting. The program may also be stored in a storage medium such as a memory card or downloaded via a telecommunications line such as the Internet.

In response to the visitor's operation of calling his or her designated resident, the intercom slave unit 30 transmits a control signal (call signal) to call the resident in the specified privately-owned area to the associated intercom master station 20.

The intercom slave unit 30 includes a loudspeaker and a microphone, and is configured to be able to communicate with the intercom master station 20.

### (2-4) Server

The server 60 includes a communications unit 61, a storage unit 62, and a control unit 63.

The server 60 includes a microcomputer including a processor and a memory, for example. That is to say, the microcomputer performs the function of the control unit 63 by making the processor execute a program stored in the memory. The program to be executed by the processor may be stored in advance in the memory of microcomputer. However, this is only an example and should not be construed as limiting. The program may also be stored in a storage medium such as a memory card or downloaded via a telecommunications line such as the Internet.

The communications unit 61 is a communications interface to communicate with the lobby intercom station 10 and the controller 40 over the network 4.

The storage unit 62 may be implemented as a storage device selected from the group consisting of a ROM, a RAM, an EEPROM, and other devices. The storage unit 62 stores images representing the faces of the residents living in the respective privately-owned areas and images representing the faces of visitors who have been registered in advance by the residents.

The control unit 63 receives, from the lobby intercom station 10 via the communications unit 61, the image captured by the image capturing unit 11 and the intended purpose of using the image captured.

The control unit 63 performs, based on the image received, an appropriate type of authentication processing according to the intended purpose received. Specifically, if the intended purpose is the first authentication purpose, the control unit 63 performs authentication processing by comparing the received image with the images, stored in the storage unit 62, of the faces of the residents living in the respective privately-owned areas (hereinafter referred to as "resident authentication processing"). On the other hand, if the intended purpose is the second authentication purpose, the control unit 63 performs authentication processing by comparing the received image with the images, stored in the storage unit 62, of the faces of the residents living in the respective privately-owned areas and the faces of the preregistered visitors (hereinafter referred to as "visitor authentication processing").

When finding the received image matching any of the images stored in the storage unit 62, the control unit 63 determines that the authentication should have been done successfully. On the other hand, when finding the received image not matching any of the images stored in the storage unit 62, the control unit 63 determines that the authentication should have failed. As used herein, if something "matches" something else, the two things may naturally match each other perfectly but may also match each other partially, as long as the degree of matching falls within a predetermined tolerance range.

The control unit 63 transmits the result of the authentication to the lobby intercom station 10 via the communications unit 61.

### (2-5) Controller

Next, the controller 40 will be described. The controller 40 includes a communications interface to communicate with the lobby intercom station 10 and the intercom master stations 20.

On receiving the call signal, the image captured by the image capturing unit 11, and the audio signal representing the visitor's voice from the lobby intercom station 10, the controller 40 transmits these signals and the image to the specified intercom master station 20. On the other hand, on receiving the audio signal representing the voice received by the intercom master station 20, the controller 40 transmits the signal to the lobby intercom station 10.

The controller 40 further controls locking and unlocking of the lobby door. For example, on receiving an unlocking signal from the intercom master station 20, the controller 40 allows the lobby door 52 to be unlocked and then locked again when a predetermined amount of time passes since then. On the other hand, on receiving an unlocking signal from the lobby intercom station 10, the controller 40 allows the lobby door 52 to be unlocked and then locked again when a predetermined amount of time passes since then. Alternatively, locking and unlocking of the lobby door may also be controlled by the lobby intercom station 10 by itself.

### (3) Operation

Next, it will be described by way of specific examples how the intercom system 1 operates.

### (3-1) First exemplary operation

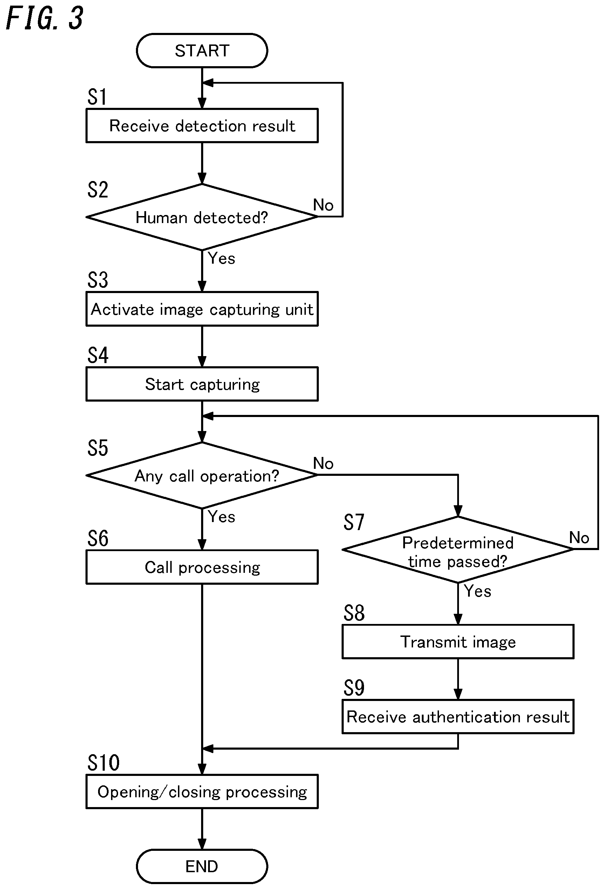

As a first exemplary operation, it will be described with reference to the flowchart of FIG. 3 how the intercom system 1 operates when the result of detection by the sensor device 50 is set as a trigger condition. In this example, the calling purpose and the first (or second) authentication purpose are set as the intended purposes.

First, the input unit 104 of the lobby intercom station 10 receives the result of detection from the sensor device 50 (in Step S1).

Next, the processing unit 105 of the lobby intercom station 10 determines whether or not the result of detection by the sensor device 50, which has been received by the input unit 104, indicates the presence of any human detected (in Step S2).

When a determination is made that the result of detection does not indicate the presence of any human detected (if the answer is NO in Step S2), the process enters a standby state for waiting for the result of detection to be provided by the sensor device 50 again.

On the other hand, when a determination is made that the result of detection indicates the presence of any human detected (if the answer is YES in Step S2), the trigger condition is satisfied. Thus, the processing unit 105 activates the image capturing unit 11 and instructs the image capturing unit 11 to start capturing images (in Steps S3 and S4).

After the image capturing unit 11 has started capturing images, the processing unit 105 determines whether or not the operating unit 14 has been subjected to any call operation within a predetermined amount of time (in Step S5).

When determining that the operating unit 14 should have been subjected to a call operation within the predetermined amount of time (if the answer is YES in Step S5), the processing unit 105 determines that the image should be intended to be used for calling a resident and starts performing call processing (in Step S6). Specifically, the processing unit 105 transmits the control signal (call signal) and the image captured by the image capturing unit 11 to a specified intercom master station 20. Thereafter, when receiving data about the visitor's voice (as an audio signal) from the microphone of the speaking unit 15 while getting ready to communicate with the intercom master station 20, the processing unit 105 transmits the audio signal received to the intercom master station 20. When receiving an audio signal representing the resident's voice from the intercom master station 20 while getting ready to communicate with the intercom master station 20, the processing unit 105 transmits the audio signal received to the loudspeaker of the speaking unit 15. At this time, the loudspeaker emits the voice based on the audio signal received.

On the other hand, when determining that the operating unit 14 should not have been subjected to any call operation yet (if the answer is NO in Step S5), the processing unit 105 determines whether or not a predetermined amount of time has passed yet (in Step S7).

When a determination is made that the predetermined amount of time has not passed yet (if the answer is NO in Step S7), the process enters a standby state for waiting for an operation to be done on the operating unit 14.

On the other hand, when determining that the predetermined amount of time should have passed (if the answer is YES in Step S7), the processing unit 105 determines that the intended use of the image should be the first (or second) authentication and transmits the image captured by the image capturing unit 11 to the server 60 (in Step S8).

After having transmitted the image, the processing unit 105 receives the result of the authentication performed by the server 60 (in Step S9).

After the call processing in Step S6, the controller 40 of the intercom system 1 performs opening and closing processing in accordance with the operation done on the intercom master station 20 (in Step S10). Specifically, when receiving an unlocking signal from the intercom master station 20, the controller 40 has the door 52 unlocked and then has the door 52 locked again when a predetermined amount of time passes. In addition, even after the result of the authentication has been received in Step S9, the controller 40 also performs the opening and closing processing step S10 in accordance with the instruction given by the lobby intercom station 10. Specifically, when receiving an unlocking signal from the lobby intercom station 10, the controller 40 has the door 52 unlocked and then has the door 52 locked again when a predetermined amount of time passes.

Almost the same processing may be performed even when the result of detection by the sensor unit 12, indicating the presence or absence of any human detected, is set as the trigger condition.

### (3-2) Second exemplary operation

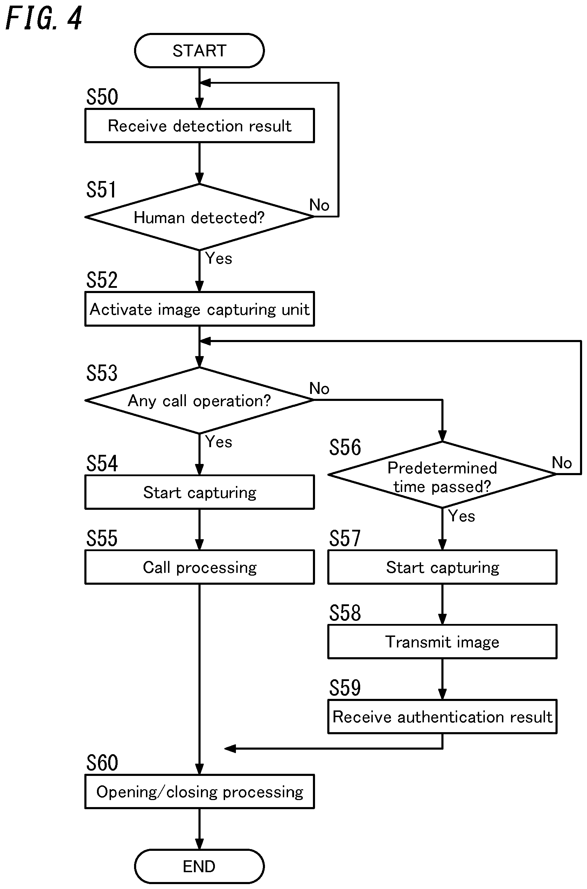

As a second exemplary operation, it will be described with reference to the flowchart of FIG. 4 how the intercom system 1 operates when the trigger condition is whether or not any call operation has been performed. In this example, the calling purpose and the first (or second) authentication purpose are set as the intended purposes. In that case, when finding that any call operation has been performed within a predetermined amount of time, the lobby intercom station 10 determines that the trigger condition, defining that the image is intended to be used for the calling purposes, should be satisfied. On the other hand, when finding that no call operation has been performed within the predetermined amount of time, the lobby intercom station 10 determines that the trigger condition, defining that the image is intended to be used for the first (or second) authentication purposes, should be satisfied.

First, the input unit 104 of the lobby intercom station 10 receives the result of detection from the sensor device 50 (or the sensor unit 12) (in Step S50).

Next, the processing unit 105 of the lobby intercom station 10 determines whether or not the result of detection by the sensor device 50 (or the sensor unit 12), which has been received by the input unit 104, indicates the presence of any human detected (in Step S51).

When a determination is made that the result of detection does not indicate the presence of any human detected (if the answer is NO in Step S51), the process enters a standby state for waiting for the result of detection to be provided by the sensor device 50 (or the sensor unit 12) again.

On the other hand, when a determination is made that the result of detection indicates the presence of any human detected (if the answer is YES in Step S51), the processing unit 105 activates the image capturing unit 11 (in Step S52).

Next, the processing unit 105 determines whether or not the operating unit 14 has been subjected to any call operation within a predetermined amount of time since the image capturing unit 11 was activated (in Step S53).

When determining that the operating unit 14 should have been subjected to any call operation within a predetermined amount of time (if the answer is YES in Step S53), the processing unit 105 finds the trigger condition, defining that the image is intended to be used for the calling purposes, satisfied, and therefore, instructs the image capturing unit 11 to start capturing an image, thus performing call processing (in Step S54 and Step S55). Specifically, the processing unit 105 transmits the control signal (call signal) and the image captured by the image capturing unit 11 to the specified intercom master station 20. Thereafter, when receiving data about the visitor's voice (as an audio signal) from the microphone of the speaking unit 15 while getting ready to communicate with the intercom master station 20, the processing unit 105 transmits the audio signal received to the intercom master station 20. When receiving an audio signal representing the resident's voice from the intercom master station 20 while getting ready to communicate with the intercom master station 20, the processing unit 105 outputs the audio signal received to the loudspeaker of the speaking unit 15. At this time, the loudspeaker emits the voice based on the audio signal received.

On the other hand, when determining that the operating unit 14 should not have been subjected to any call operation yet (if the answer is NO in Step S53), the processing unit 105 determines whether or not the predetermined amount of time has passed yet (in Step S56).

When a determination is made that the predetermined amount of time has not passed yet (if the answer is NO in Step S56), the process enters a standby state for waiting for the call operation to be performed on the operating unit 14.

On the other hand, when determining that the predetermined amount of time should have passed (if the answer is YES in Step S56), the processing unit 105 finds that the trigger condition, defining that the intended use of the image is the first (or second) authentication, satisfied, and therefore, instructs the image capturing unit 11 to start capturing an image (in Step S57). Then, the processing unit 105 transmits the image captured by the image capturing unit 11 to the server 60 (in Step S58).

After having transmitted the image, the processing unit 105 receives the result of the authentication performed by the server 60 (in Step S59).

After the call processing in Step S55, the controller 40 of the intercom system 1 performs opening and closing processing in accordance with the operation performed on the intercom master station 20 (in Step S60). Specifically, when receiving an unlocking signal from the intercom master station 20, the controller 40 has the door 52 unlocked and then has the door 52 locked again when a predetermined amount of time passes. In addition, even after the result of the authentication has been received in Step S59, the controller 40 also performs the opening and closing processing step S60 in accordance with the instruction given by the lobby intercom station 10. Specifically, when receiving an unlocking signal from the lobby intercom station 10, the controller 40 has the door 52 unlocked and then has the door 52 locked again when a predetermined amount of time passes.

### (3-3) Third exemplary operation

As a third exemplary operation, it will be described how the intercom system 1 operates when the call operation is set as the trigger condition. In that case, in response to any call operation performed, the image capturing unit 11 starts capturing an image, and therefore, the authentication processing is not performed by the server 60.

Therefore, in that case, the intercom system 1 performs the processing steps S50-S56 and S60 shown in FIG. 4. That is to say, unless any call operation is performed within a predetermined amount of time (if the answer is NO in Step S56), the processing ends. That is to say, neither the call processing nor the opening and closing processing is performed in such a situation.

### (3-4) Server's operation

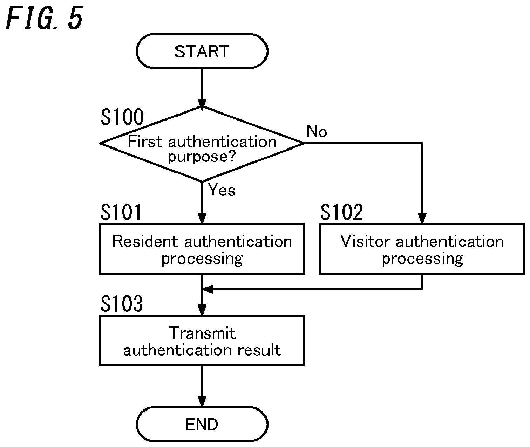

Next, the operation of the server 60 will be described with reference to the flowchart shown in FIG. 5.

First, the control unit 63 of the server 60 determines, on receiving the image captured by the image capturing unit 11 and the purpose of using the image from the lobby intercom station 10, whether or not the intended purpose is the first authentication purpose (in Step S100).

When finding the intended purpose to be the first authentication purpose (if the answer is YES in Step SI00), the control unit 63 performs the resident authentication processing (in Step S101). Specifically, the control unit 63 compares the received image with the images, stored in the storage unit 62, of the faces of the residents living in the respective privately-owned areas.

On the other hand, when finding the intended purpose not to be the first authentication purpose (i.e., to be the second intended purpose) (if the answer is NO in Step SI00), the control unit 63 performs the visitor authentication processing (in Step S102). Specifically, the control unit 63 compares the received image with the images, stored in the storage unit 62, of the faces of the residents living in the respective privately-owned areas and the faces of the preregistered visitors.

Then, the control unit 63 transmits the result of the processing step S101 or S102 (i.e., the result of the authentication) to the lobby intercom station 10 (in Step S103).

### (4) Advantage

According to this embodiment, the intercom system 1 sets a trigger condition for making the image capturing unit 11 start capturing an image. This allows the timing to start capturing an image to be set depending on the intended purpose of using the image. Specifically, when the image is intended to be used for authentication purposes, starting the image capturing session as soon as any human is detected at the door 51 (see FIG. 2) allows the authentication processing to be performed at an earlier timing than starting the image capturing session just before the visitor reaches the door 52. This shortens the amount of time for which the visitor who has reached the door 52 has to wait before the door 52 opens, thus relieving his or her stress due to waiting. On the other hand, when the image is intended to be used for calling purposes, the image capturing session does not have to be started as soon as any human is detected at the door 51 (see FIG. 2). In such a situation, starting the image capturing session at the timing when the call operation is performed allows power consumption due to image capturing to be reduced.

### (5) Resume

(5.1) As can be seen from the foregoing description, a lobby intercom station (10) according to the present disclosure is provided in a common area of a facility (5) including the common area and a plurality of privately-owned areas. The lobby intercom station (10) includes an image capturing unit (11) and a condition setting unit (first setting unit (101)) for setting a trigger condition for making the image capturing unit (11) start capturing an image or a trigger condition for starting processing using the image captured by the image capturing unit (11). This configuration allows for setting at least one of the trigger condition for making the image capturing unit (11) start capturing an image or the trigger condition for starting processing using the image captured by the image capturing unit (11). This allows the user to change the timing to start capturing an image according to the intended purpose and to set a timing to use the image for any other purpose.
(5.2) A lobby intercom station (10) according to another aspect of the present disclosure, which may be implemented in conjunction with (5.1), further includes an input unit (104) to receive command information. The trigger conditions include at least one of whether or not the input unit (104) has received any command information or what type of command information the input unit (104) has received. This configuration allows the trigger conditions to be set in accordance with the command information.
(5.3) A lobby intercom station (10) according to still another aspect of the present disclosure, which may be implemented in conjunction with (5.2), further includes an operating unit (14). The command information includes information about a type of operation the operating unit (14) has been subjected to. This configuration allows the trigger condition to be set according to the type of operation the operating unit (14) has been subjected to.
(5.4) In a lobby intercom station (10) according to yet another aspect of the present disclosure, which may be implemented in conjunction with (5.2) or (5.3), the input unit (104) receives, as the command information, information from an external device (such as the sensor device 50). This configuration allows the trigger condition to be set in accordance with the information provided by an external device.
(5.5) A lobby intercom station (10) according to yet another aspect of the present disclosure, which may be implemented in conjunction with any one of (5.1) to (5.4), further includes a purpose setting unit (second setting unit 102) configured to set a purpose of using the image captured by the image capturing unit (11). The purpose setting unit selects the purpose of using the image from a plurality of optional purposes including at least a first purpose of transmitting the image to a telecommunications device (such as the intercom master station 20) provided for at least one of a plurality of privately-owned areas and a second purpose different from the first purpose. According to this configuration, the intended purpose of using the image is set. This allows the image captured by the image capturing unit (11) to be used for not only calling purposes but also for other purposes as well. This expands the range of purposes for which the image captured by the image capturing unit (11) is used.
(5.6) In a lobby intercom station (10) according to yet another aspect of the present disclosure, which may be implemented in conjunction with (5.5), the image captured by the image capturing unit (11) includes a shot of a person, and the second purpose includes a purpose of authenticating the person shot in the image. This configuration allows the image captured by the image capturing unit (11) to be used for authentication purposes, thus increasing the degree of security against visitors.
(5.7) A lobby intercom station (10) according to yet another aspect of the present disclosure, which may be implemented in conjunction with any one of (5.1) to (5.6), further includes a transmission destination setting unit (third setting unit (103)) to set a destination to which the image captured by the image capturing unit (11) is to be transmitted. The transmission destination setting unit selects the destination, to which the image is to be transmitted, from a plurality of potential destinations including a telecommunications device (such as the intercom master station 20) provided for one of the plurality of privately-owned areas and an external device (such as the server (60)) provided outside of the facility (5). According to this configuration, the destination of the image is set. This allows the transmission destination of the image to be changed depending on the intended purpose of using the image.
(5.8) An intercom system (1) according to an exemplary embodiment of the present disclosure includes the lobby intercom station (10) according to any one of (5.1) to (5.7) and telecommunications devices (intercom master station 20) respectively provided for a plurality of privately-owned areas. This configuration allows for setting at least one of the trigger condition for making the image capturing unit (11) start capturing an image or the trigger condition for starting processing using the image captured by the image capturing unit (11). This allows the user to change the timing to start capturing an image according to the intended purpose and to set a timing to use the image for any other purpose.

### (Variations)

Variations of the exemplary embodiment described above will be enumerated one after another. Note that any of the variations to be described below may be adopted as appropriate in combination with the embodiment described above.

In the embodiment described above, the lobby intercom station 10 is configured to transmit the image captured by the image capturing unit 11 to the server 60 via the communications unit 13 and over the network 4. However, this is only an example and should not be construed as limiting. Alternatively, the lobby intercom station 10 may be configured to transmit the image captured by the image capturing unit 11 to the server 60 via the communications unit 13 and the controller 40 and over the network 4. In that case, the lobby intercom station 10 may communicate with the controller 40 through a trunk line which is used to allow the lobby intercom station 10 to communicate with the intercom master stations 20. The controller 40 may be connected to the network 4 either through a connection gateway or by using a gateway capability built in the controller 40. Still alternatively, the lobby intercom station 10 may also be configured to transmit the image captured by the image capturing unit 11 to one of the intercom master stations 20 via the communications unit 13 and the controller 40 to make the intercom master station 20 forward the image to the server 60 via the controller 40 and over the network 4. Yet alternatively, the lobby intercom station 10 may also be configured to transmit the image captured by the image capturing unit 11 to the intercom master station 20 once to make the intercom master station 20 forward the image to the server 60 directly, not via the controller 40.

Also, in the embodiment described above, detection of opening or closing of the door 51 may be a trigger condition for making the image capturing unit 11 start capturing an image. Alternatively, initiation of contactless communication may also be a trigger condition for making the image capturing unit 11 start capturing an image. In the latter case, the lobby intercom station 10 is provided with a card reader. When reaching the door 52, either a visitor or a resident living in the facility 5 who has come home from outside makes the card reader read information (such as a user ID) stored in the card issued to him or her in advance. On finding that the input unit 104 has received the information read by the card reader, the processing unit 105 determines that a trigger condition for making the image capturing unit 11 start capturing an image should be satisfied.

Furthermore, in the embodiment described above, the intercom system 1 may also be configured to allow the image capturing unit 11 to capture images continuously if no trigger condition for making the image capturing unit 11 start capturing an image is set.

Moreover, in the embodiment described above, the communication between the controller 40 and the intercom master stations 20 and the communication between the intercom master stations 20 and the intercom slave units 30 may be wireless communication. Also, when the controller 40 and the intercom master stations 20 communicate wirelessly with each other and the intercom master stations 20 and the intercom slave units 30 communicate wirelessly with each other, the intercom system 1 may also be configured to use cellphones, smartphones, tablet computers, or any other telecommunications devices instead of the intercom master stations 20.

Besides, in the embodiment described above, the server 60 is configured to perform the authentication processing. However, this is only an example and should not be construed as limiting. Alternatively, any of the lobby intercom station 10, the intercom master stations 20, or the intercom slave units 30 may perform the authentication processing instead.

Furthermore, in the embodiment described above, the first setting unit 101 sets the trigger condition for making the image capturing unit 11 start capturing an image. However, this is only an example and should not be construed as limiting. Alternatively, the first setting unit 101 may set a trigger condition for starting processing using the image captured by the image capturing unit 11. For example, the first setting unit 101 may regard any operation, performed on the operating unit 14 since the image capturing unit 11 started capturing an image upon detection of any human by the sensor device 50, as a trigger condition for starting the processing of transmitting the image to the server 60 as a type of processing using the image captured by the image capturing unit 11. This allows for setting the timing to start the processing of transmitting an image for authentication purposes to the server 60. Meanwhile, in a situation where authentication is performed by the lobby intercom station 10, the first setting unit 101 may regard any operation, performed on the operating unit 14 since the image capturing unit 11 started capturing an image upon detection of any human by the sensor device 50, as a trigger condition for starting the authentication processing as another type of processing using the image captured by the image capturing unit 11.

Alternatively, the first setting unit 101 may also regard detection of any human by the sensor device 50 as a trigger condition for starting the processing of transmitting the image to the server 60 as another type of processing using the image captured by the image capturing unit 11. In that case, as soon as the sensor device 50 detects any human, the lobby intercom station 10 instructs the image capturing unit 11 to start capturing an image and transmits the image captured by the image capturing unit 11 to the server 60 to make the server 60 perform the authentication processing. This allows for setting the timings to start capturing an image for authentication purposes and start performing the processing of transmitting the image to the server 60. Meanwhile, in a situation where the authentication is performed by the lobby intercom station 10, the first setting unit 101 may regard detection of any human by the sensor device 50 as a trigger condition for starting the authentication processing as another type of processing using the image captured by the image capturing unit 11. In that case, as soon as the sensor device 50 detects any human, the lobby intercom station 10 instructs the image capturing unit 11 to start capturing an image and performs the authentication processing using the image captured by the image capturing unit 11.

Optionally, the first setting unit 101 may also set both the trigger condition for making the image capturing unit 11 start capturing an image and the trigger condition for starting the processing using the image captured by the image capturing unit 11.

Furthermore, in the embodiment described above, the trigger condition received by the first setting unit 101 may be specified by the operating unit 14 of the lobby intercom station 10. That is to say, the first setting unit 101 may also be configured to set the trigger condition in accordance with the operation performed on the operating unit 14. Alternatively, an external device, different from the lobby intercom station 10, may also set the trigger condition for the lobby intercom station 10. In other words, the first setting unit 101 may be provided in the lobby intercom station 10 or an external device, without limitation. Examples of the external devices include the intercom master stations 20, a management device installed in the caretaker's room of a multi-family dwelling house provided with the intercom system 1, and a telecommunications device such as a personal computer. The same statement applies to the second setting unit 102 as well. The second setting unit 102 may also be provided in the lobby intercom station 10 or an external device, without limitation. The same statement applies to the third setting unit 103 as well. The third setting unit 103 may be provided in the lobby intercom station 10 or an external device, without limitation.

Furthermore, in the embodiment described above, the trigger condition, the intended purpose of using the image, and the destination of the image transmitted are set with respect to the lobby intercom station 10. However, this is only an example and should not be construed as limiting. Alternatively, the trigger condition, the intended purpose of using the image, and the destination of the image transmitted may also be set with respect to an intercom slave unit 30 with an image capturing unit. In that case, an intercom system including an intercom master station 20 and such an intercom slave unit 30 is applicable to a single-family dwelling house (facility). If the trigger condition is set with respect to the intercom slave unit 30, the first setting unit 101 may be provided in the intercom slave unit 30. Alternatively, the first setting unit 101 may also be provided in an external device so that the external device may set the trigger condition with respect to the intercom slave unit 30. If the intended purpose is set with respect to the intercom slave unit 30, the second setting unit 102 may be provided in the intercom slave unit 30. Alternatively, the second setting unit 102 may also be provided in an external device so that the external device may set the intended purpose with respect to the intercom slave unit 30. If the destination is set with respect to the intercom slave unit 30, the third setting unit 103 may be provided in the intercom slave unit 30. Alternatively, the third setting unit 103 may also be provided in an external device so that the external device may set the destination with respect to the intercom slave unit 30.

In the embodiment described above, the intercom system 1 may save the images captured by the image capturing unit 11. In that case, at least one of the lobby intercom station 10, the intercom master stations 20, the intercom slave units 30, the controller 40, or the server 60 saves the images. This allows the intercom system 1 to recognize visitors who have visited the resident's house in the past.

In the embodiment described above, if the authentication has failed, the lobby intercom station 10 may indicate that in some way. Specifically, in that case, the lobby intercom station 10 may emit, through the loudspeaker of the speaking unit 15, a voice message indicating the failure of the authentication. Alternatively, if the image capturing unit 11 has failed to capture an image of the visitor, at least one of the failure of image capturing or a request to capture an image again may be indicated in some way.

Optionally, in the embodiment described above, if the resident authentication processing has been done successfully, a notification message indicating that the resident to be authenticated has come home may be sent to a pre-specified device such as a cellphone, a smartphone, or a tablet computer.

Meanwhile, if the visitor authentication processing has been done successfully, then a notification message indicating that some visitor has arrived at the facility may be sent to any of the intercom master stations 20. In that case, the intercom master station 20 may display, on the display unit 25, a text message indicating the arrival of the visitor or emit a voice message to the same effect through the loudspeaker of the speaking unit 24.

The first embodiment described above is only one of various embodiments of the present disclosure, and may be readily modified, changed, replaced, or combined with any other embodiments, depending on a design choice or any other factor, without departing from a true spirit and scope of the present disclosure. Also, the same function as that of the lobby intercom station 10 may be implemented as a processing method, a computer program, or a non-transitory storage medium that stores the program thereon, for example. A method of processing the lobby intercom station 10 is for use in a lobby intercom station 10 provided for a common area of a facility 5 including the common area and a plurality of privately-owned areas. The processing method includes capturing an image and setting a trigger condition for starting capturing the image. A program according to an aspect is designed to make a computer system perform the function of the lobby intercom station 10 described above or the method of processing the lobby intercom station 10.

The lobby intercom station 10 according to the present disclosure, or the agent that carries out the method of processing the lobby intercom station 10 according to the present disclosure includes a computer system. In that case, the computer system may include, as principal hardware components, a processor and a memory. The functions of the lobby intercom station 10 according to the present disclosure, or the agent that carries out the method of processing the lobby intercom station 10 according to the present disclosure may be performed by making the processor execute the program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a largescale integrated circuit (LSI). Those electronic circuits may be integrated together on a single chip or distributed on multiple chips without limitation. Those multiple chips may be integrated together in a single device or distributed in multiple devices without limitation.

### (Resume)

As can be seen from the foregoing description, an intercom system (1) according to a first aspect includes a condition setting unit (first setting unit 101) to set at least one of a trigger condition for making an image capturing unit (11) of an intercom doorphone (lobby intercom station 10, intercom slave unit 30) start capturing an image or a trigger condition for starting processing using the image captured by the image capturing unit (11).

This configuration allows for setting at least one of the trigger condition for making the image capturing unit (11) start capturing an image or the trigger condition for starting processing using the image captured by the image capturing unit (11). This allows the user to change, according to the intended purpose, the timing to start capturing an image and to set a timing to use the image for any other purpose.

An intercom system (1) according to a second aspect, which may be implemented in conjunction with the first aspect, further includes an input unit (104) to receive command information. The trigger conditions include at least one of whether or not the input unit (104) has received any command information or what type of command information the input unit (104) has received.

This configuration allows the trigger conditions to be set in accordance with the command information.

An intercom system (1) according to a third aspect, which may be implemented in conjunction with the second aspect, further includes an operating unit (14). The command information includes information about a type of operation the operating unit (14) has been subjected to.

This configuration allows the trigger condition to be set according to the type of operation the operating unit (14) has been subjected to.

In an intercom system (1) according to a fourth aspect, which may be implemented in conjunction with the second or third aspect, the input unit (104) receives, as the command information, information from an external device (such as a sensor device 50).

This configuration allows the trigger condition to be set in accordance with the information provided by an external device.

An intercom system (1) according to a fifth aspect, which may be implemented in conjunction with any one of the first to fourth aspects, further includes a purpose setting unit (second setting unit 102) to set the intended purpose of using the image captured by the image capturing unit (11). The purpose setting unit selects the purpose of using the image from a plurality of optional purposes including a first purpose of transmitting the image to a telecommunications device (such as the intercom master station 20) and a second purpose different from the first purpose.

According to this configuration, the intended purpose of using the image is set. This allows the image captured by the image capturing unit (11) to be used for not only calling purposes but also for other purposes as well. This expands the range of purposes of using the image captured by the image capturing unit (11).

In an intercom system (1) according to a sixth aspect, which may be implemented in conjunction with the fifth aspect, the image captured by the image capturing unit (11) includes a shot of a person, and the second purpose includes a purpose of authenticating the person shot in the image.

This configuration allows the image captured by the image capturing unit (11) to be used for authentication purposes, thus increasing the degree of security against visitors.

An intercom system (1) according to a seventh aspect, which may be implemented in conjunction with any one of the first to sixth aspects, further includes a transmission destination setting unit (third setting unit 103) to set a destination to which the image captured by the image capturing unit (11) is to be transmitted. The transmission destination setting unit selects the destination from a plurality of potential destinations including a telecommunications device (such as the intercom master station 20) provided for one of a plurality of privately-owned areas and an external device (such as the server 60).

This allows the transmission destination of the image to be changed depending on the intended purpose of using the image.

### (Second embodiment)

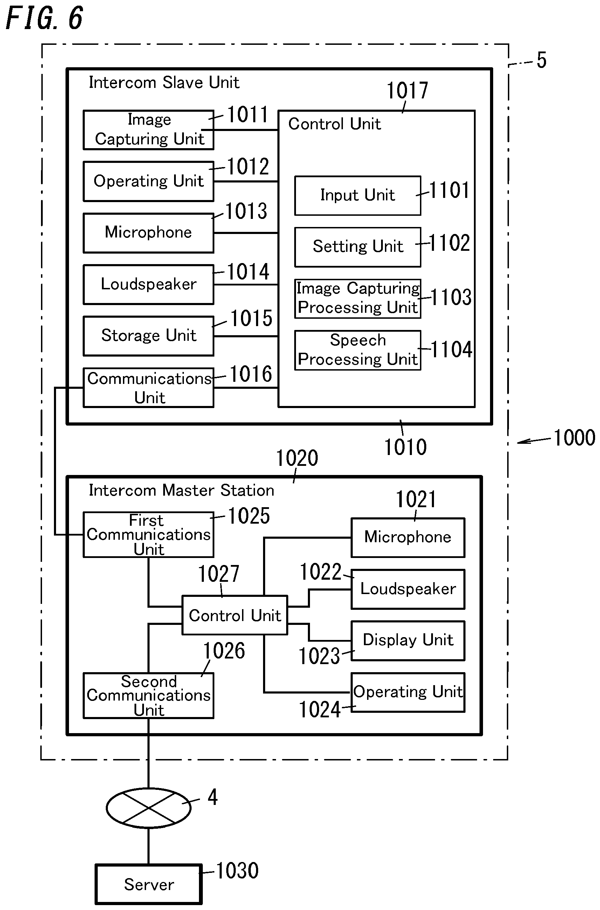

An intercom system 1000, an intercom slave unit 1010 as an intercom device, and an intercom master station 1020 as a telecommunications device according to a second exemplary embodiment will be described with reference to FIGS. 6-9.

### (1) Overview

An intercom system 1000 according to a second exemplary embodiment includes an intercom slave unit 1010 as an intercom device and an intercom master station 1020 as a telecommunications device as shown in FIG. 6. In the following description of the second embodiment, the intercom system 1000 is applied to a single-family dwelling house.

The intercom slave unit 1010 is installed at the outside main entrance of a residential facility 5, which is a single-family dwelling house in this embodiment. The intercom master station 1020 is installed inside of the residential facility 5 and configured to communicate with the intercom slave unit 1010. The intercom master station 1020 is further configured to communicate with a server 1030 over a network 4 such as the Internet.

In response to a call operation performed by a person who is operating the intercom slave unit 1010 (e.g., either a visitor or the resident who has come home from outside and hereinafter referred to as a "caller"), the intercom slave unit 1010 transmits a control signal (call signal) to call a resident of the residential facility 5 to the intercom master station 1020. The intercom slave unit 1010 transmits, when finding itself ready to communicate with the intercom master station 1020 as a result of the operation on the intercom master station 1020, audio data of the caller to the intercom master station 1020. The intercom master station 1020 emits, when receiving the audio data of the caller who is operating the intercom slave unit 1010, the voice of the caller based on the data received. The intercom slave unit 1010 transmits an image of the caller who is operating the intercom slave unit 1010 to the intercom master station 1020 continuously through a period that begins when the call signal starts to be transmitted and ends when the caller finishes speaking with the responder. In response, the intercom master station 1020 displays the image of the caller continuously through that period.

In response to an operation, different from the call operation, performed by the caller who is operating the intercom slave unit 1010, the intercom slave unit 1010 captures an image for a different purpose from the calling purpose. The different purpose may be, for example, using the image to perform the processing of authenticating the caller who is operating the intercom slave unit 1010. The intercom slave unit 1010 transmits, on capturing an image for authentication processing, the image captured to the server 1030 via the intercom master station 1020.

The server 1030 stores, in advance, the images of the residents of the residential facility 5, their relatives, and visitors such as their acquaintances. On receiving the image captured by the intercom slave unit 1010 (hereinafter referred to as a "captured image"), the server 1030 performs the authentication processing using the captured image and the images stored in advance (hereinafter referred to as "stored images"). When finding any of the stored images matching the captured image of the person who is operating the intercom slave unit 1010, the server 1030 determines that the authentication should have been done successfully. On the other hand, when finding no stored images matching the captured image of the person who is operating the intercom slave unit 1010, the server 1030 determines that the authentication should have failed.

The intercom slave unit 1010 decides, based on the result of the authentication performed by the server 1030, whether or not to accept the call for the resident.

### (2) Configuration

### (2-1) Intercom slave unit

First, a configuration for the intercom slave unit 1010 will be described. The intercom slave unit 1010 includes an image capturing unit 1011, an operating unit 1012, a microphone 1013, a loudspeaker 1014, a storage unit 1015, a communications unit 1016, and a control unit 1017 as shown in FIG. 6.

The intercom slave unit 1010 includes a microcomputer including a processor and a memory, for example. That is to say, the microcomputer performs the function of the control unit 1017 by making the processor execute a program stored in the memory. The program to be executed by the processor may be stored in advance in the memory of microcomputer. However, this is only an example and should not be construed as limiting. The program may also be stored in a storage medium such as a memory card or downloaded via a telecommunications line such as the Internet.

The image capturing unit 1011 may be implemented as a camera including an image capture device such as a CCD image sensor, a CMOS image sensor, or any other two-dimensional image sensor for shooting the subject (such as a visitor). In this embodiment, the image capturing area (view) of the image capturing unit 1011 is set in front of the intercom slave unit 1010 such that when a caller such as a visitor or the resident who has come home from outside is operating the intercom slave unit 1010, at least his or her face may be shot. In this embodiment, the image capturing unit 1011 is a camera for shooting a moving image (video). However, this is only an example and should not be construed as limiting. The image capturing unit 11 may also be a camera for shooing a still image. Also, even though the image capturing unit 11 of this embodiment is a camera for shooting a color image, the image capturing unit 11 may be a camera for shooting a monochrome image as well.

The communications unit 1016 is a communications interface for communicating with the intercom master station 1020. The communications unit 1016 is electrically connected to the intercom master station 1020 through a two-wire transmission line such as a twisted pair of wires. The communications unit 1016 transmits the image data of the image captured by the image capturing unit 1011 to the intercom master station 1020. The communications unit 1016 is configured to be able to communicate bidirectionally with the intercom master stations 1020 such that an audio signal may be transmitted bidirectionally between the intercom slave unit 1010 and the intercom master station 1020.

The storage unit 1015 may be implemented as a storage device selected from the group consisting of a ROM, a RAM, an EEPROM, and various other types of storage media.

The storage unit 1015 stores a first zoom power for a first image capturing mode in which the image capturing unit 1011 performs an image capturing session when the call operation is performed in one way on the operating unit 1012. The storage unit 1015 also stores a second zoom power for a second image capturing mode in which the image capturing unit 1011 performs an image capturing session in another way when another type of operation, different from the call operation (e.g., the operation of holding down the button 1012a), is performed on the operating unit 1012. The second zoom power is greater than the first zoom power.

In this case, as the zoom power changes while the image capturing unit 1011 is capturing an image, the focal length also changes. That is to say, the angle of view also changes while the image capturing unit 1011 is capturing an image. In other words, the storage unit 1015 may store, instead of the first zoom power and the second zoom power, a first angle of view when the image capturing unit 1011 is capturing an image in response to the call operation and a second angle of view when the image capturing unit 1011 is capturing an image in response to a different type of operation from the call operation. In that case, the second angle of view is smaller than the first angle of view. In the following description, an example using zoom powers will be described.

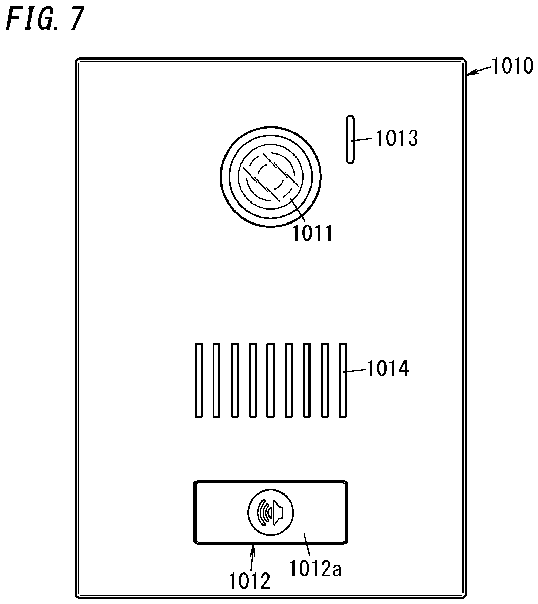

The operating unit 1012 includes the button 1012a (see FIG. 7) with which the caller who is operating the intercom slave unit 1010 makes a call operation. For example, if the button 1012a is pressed for less than a predetermined amount of time, the intercom slave unit 1010 instructs the communications unit 1016 to transmit a control signal (call signal) to call the resident and data of the image captured at the first zoom power (hereinafter referred to as "first image data") to the intercom master station 1020. On the other hand, if the button 1012a is pressed for the predetermined amount of time or more (i.e., if the button 1012a is held down), then the intercom slave unit 1010 transmits data of the image captured at the second zoom power (hereinafter referred to as "second image data") and a transmission instruction signal, indicating that the image data is going to be transmitted to the server 1030, to the intercom master station 1020.

The microphone 1013 picks up the voice of the caller who is operating the operating unit 1012 (such as a visitor or the resident who has come home from outside) and transmits the audio data thus acquired to the intercom master station 1020.

The loudspeaker 1014 emits the voice of the responder based on the audio data transmitted from the intercom master station 1020 while the intercom slave unit 1010 is ready to communicate with the intercom master station 1020.

The control unit 1017 includes an input unit 1101, a setting unit 1102, an image capturing processing unit 1103, and a speech processing unit 1104 as shown in FIG. 6.

The input unit 1101 receives the command entered by the caller who has manipulated the button of the operating unit 1012. The input unit 1101 outputs, when the button starts to be manipulated on the operating unit 1012 (i.e., when the button 1012a is pressed), a call initiation signal to the image capturing processing unit 1103. Thereafter, the input unit 1101 selectively outputs a first input signal or a second input signal to the setting unit 1102 and the image capturing processing unit 1103 depending on how long the button 1012a has been held down. For example, the input unit 1101 may output the first input signal if the button 1012a has been held down for less than a predetermined amount of time and output the second input signal if the button 1012a has been held down for the predetermined amount of time or more.

The setting unit 1102 sets either the first zoom power or the second zoom power with respect to the image capturing unit 1011 depending on the content of the command received by the input unit 1101. Specifically, the setting unit 1102 sets the first zoom power with respect to the image capturing unit 1011 when receiving the first input signal from the input unit 1101. The setting unit 1102 sets the second zoom power with respect to the image capturing unit 1011 when receiving the second input signal from the input unit 1101. The image capturing unit 1011 captures an image at the zoom power set by the setting unit 1102.

The setting unit 1102 resets, when finding, after having changed the zoom power of the image capturing unit 1011 from the first zoom power into the second zoom power, that a predetermined condition is satisfied, the zoom power of the image capturing unit 1011 from the second zoom power into the first zoom power. As used herein, the "predetermined condition is satisfied" when a predetermined amount of time passes since the communication between the intercom slave unit 1010 and the intercom master station 1020 ends.

The image capturing processing unit 1103 controls the image capturing related processing by the image capturing unit 1011. The image capturing processing unit 1103 activates, on receiving the call initiation signal from the input unit 1101, the image capturing unit 1011. That is to say, the image capturing processing unit 1103 starts supplying power to the image capturing unit 1011. The image capturing processing unit 1103 instructs, when receiving the first input signal from the input unit 1101, the image capturing unit 1011 to capture an image at the first zoom power set by the setting unit 1102. The image capturing processing unit 1103 instructs, when receiving the second input signal from the input unit 1101, the image capturing unit 1011 to capture an image at the second zoom power set by the setting unit 1102.

The image capturing processing unit 1103 transmits, when receiving the first input signal from the input unit 1101, not only the first image data but also the control signal (call signal) to the intercom master station 1020.

The image capturing processing unit 1103 transmits, when receiving the second input signal from the input unit 1101, not only the second image data but also the transmission instruction signal, instructing the image data to be transmitted to the server 1030, to the intercom master station 1020.

The image capturing processing unit 1103 decides, based on the result of the authentication performed by the server 1030 (hereinafter referred to as an "authentication result"), whether or not to perform call processing in response to the call operation (i.e., whether or not to accept the call operation). Specifically, the image capturing processing unit 1103 decides to perform the call processing if the authentication has been done successfully but decides not to perform the call processing if the authentication has failed. When deciding to perform the call processing, the image capturing processing unit 1103 transmits not only the image data (second image data) but also the control signal (call signal) to the intercom master station 1020.

The image capturing processing unit 1103 outputs, when the intercom slave unit 1010 and the intercom master station 1020 are ready to communicate with each other as a result of the operation done on the intercom master station 1020, the image captured by the image capturing unit 1011 to the intercom master station 1020 via the communications unit 1016.

When the communication between the intercom slave unit 1010 and the intercom master station 1020 ends (e.g., when the caller and the responder finish speaking), the image capturing processing unit 1103 deactivates the image capturing unit 1011. That is to say, the image capturing processing unit 1103 cuts off the supply of power to the image capturing unit 1011.

The speech processing unit 1104 transmits, when receiving audio data (audio signal) of the caller who is operating the intercom slave unit 1010 from the microphone 1013 while the intercom slave unit 1010 and the intercom master station 1020 are ready to communicate with each other, the audio signal received to the intercom master station 1020.

The speech processing unit 1104 transmits, when receiving an audio signal representing the voice of a responder in the residential facility 5 from the intercom master station 1020 while the intercom slave unit 1010 and the intercom master station 1020 are ready to communicate with each other (i.e., while the caller and responder are ready to speak with each other), the audio signal received to the loudspeaker 1014. In response, the loudspeaker 1014 emits the voice based on the audio signal received.

### (2-2) Intercom master station

Next, a configuration for the intercom master station 1020 will be described. The intercom master station 1020 includes a microphone 1021, a loudspeaker 1022, a display unit 1023, an operating unit 1024, a first communications unit 1025, a second communications unit 1026, and a control unit 1027 as shown in FIG. 6.

The intercom master station 1020 includes a microcomputer including a processor and a memory, for example. That is to say, the microcomputer performs the function of the control unit 1027 by making the processor execute a program stored in the memory. The program to be executed by the processor may be stored in advance in the memory of microcomputer. However, this is only an example and should not be construed as limiting. The program may also be stored in a storage medium such as a memory card or downloaded via a telecommunications line such as the Internet.

The first communications unit 1025 is a communications interface for communicating with the intercom slave unit 1010. The first communications unit 1025 is electrically connected to the intercom slave unit 1010 through a two-wire transmission line such as a twisted pair of wires. The first communications unit 1025 is configured to be able to communicate bidirectionally with the intercom slave unit 1010 such that an audio signal may be transmitted bidirectionally between the intercom slave unit 1010 and the intercom master station 1020. The first communications unit 1025 is also configured to be able to receive the image data transmitted from the intercom master station 1020.

The second communications unit 1026 is an interface for communicating with the server 1030 over the network 4.

The microphone 1021 picks up the voice of the resident of the residential facility 5 (i.e., the responder who is operating the intercom master station 1020).

The loudspeaker 1022 emits, when the intercom master station 1020 and the intercom slave unit 1010 are ready to communicate with each other, voice based on the audio data transmitted from the intercom slave unit 1010. The loudspeaker 1022 also emits a ringing tone such as a chime in response to the call processing by the control unit 1027.

The display unit 1023 displays the image captured by the image capturing unit 1011 based on the image data transmitted from the intercom slave unit 1010.

The operating unit 1024 accepts the operation performed by the resident of the residential facility 5. When a predetermined type of operation (such as pressing a button) is performed on the operating unit 1024 while the first communications unit 1025 is receiving the control signal (call signal) to call the resident from the intercom slave unit 1010, the intercom master station 1020 and the intercom slave unit 1010 are ready to communicate with each other.

The control unit 1027 performs, when receiving the call signal and the first image data from the intercom slave unit 1010 via the first communications unit 1025, image processing on the first image data. In that case, the display unit 1023 displays the image processed by the control unit 1027. In addition, on receiving the call signal, the control unit 1027 also performs the call processing of emitting the ringing tone through the loudspeaker 1022.

The control unit 1027 transmits, on receiving the transmission instruction signal and the second image data, the second image data to the server 1030.

Furthermore, the control unit 1027 transmits, when receiving the result of the authentication performed by the server 1030 (i.e., the authentication result) from the server 1030 via the second communications unit 1026 and over the network 4, the authentication result to the intercom slave unit 1010.

Furthermore, on receiving the audio data (audio signal) representing the voice of the responder from the microphone 1021 while the intercom master station 1020 and the intercom slave unit 1010 are ready to communicate with each other, the control unit 1027 transmits the audio signal received to the intercom slave unit 1010 via the first communications unit 1025. Also, on receiving the audio signal representing the voice of the caller who is operating the intercom slave unit 1010 from the intercom slave unit 1010 while the intercom master station 1020 and the intercom slave unit 1010 are ready to communicate with each other, the control unit 1027 outputs the received audio signal to the loudspeaker 1022. In response, the loudspeaker 1022 emits the voice based on the audio signal received.

### (2-3) Server

The server 1030 stores, in advance, the images of the residents of the residential facility 5, their relatives, and visitors such as their acquaintances as described above. On receiving the image captured by the intercom slave unit 1010 (hereinafter referred to as a "captured image"), the server 1030 performs the authentication processing using the captured image and the images stored in advance (hereinafter referred to as "stored images"). The image capturing unit 1011 captures a moving image as described above. Therefore, the image the server 1030 receives from the intercom slave unit 1010 is also a moving image. Thus, the server 1030 performs authentication processing of selecting, through face detection processing, for example, the best still image for authentication purposes from the moving image received and then collating the still image selected with the plurality of stored images.

The server 1030 then transmits the authentication result to the intercom slave unit 1010 via the intercom master station 1020.

### (3) Operation

The operation of the intercom slave unit 1010 will be described.

### (3-1) Calling-related processing

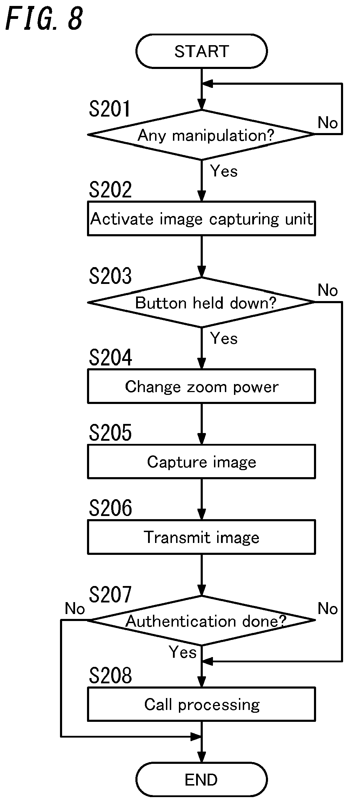

First of all, the calling-related processing will be described with reference to FIG. 8.

The input unit 1101 determines whether or not the operating unit 1012 has been subjected to the operation of manipulating the button (hereinafter referred to as "button manipulation") (in Step S201).

If the input unit 1101 determines that the operating unit 1012 should not have been subjected to any button manipulation (if the answer is NO in Step S201), the process waits for any button manipulation to be performed.

On the other hand, if the input unit 1101 determines that the operating unit 1012 should have been subjected to button manipulation (if the answer is YES in Step S201), the image capturing processing unit 1103 activates the image capturing unit 1011 (in Step S202).

The input unit 1101 determines whether or not the button manipulation is holding down the button (in Step S203).

If the input unit 1101 determines that the button manipulation should be holding down the button (if the answer is YES in Step S203), the setting unit 1102 changes the zoom power of the image capturing unit 1011 (in Step S204). Specifically, the setting unit 1102 sets the zoom power at the second zoom power with respect to the image capturing unit 1011.

Under the control of the image capturing processing unit 1103, the image capturing unit 1011 captures an image at the zoom power (second zoom power) specified by the setting unit 1102 (in Step S205).

The image capturing processing unit 1103 transmits the data of the image captured at the second zoom power by the image capturing unit 1011 (second image data) to the server 1030 via the intercom master station 1020 (in Step S206).

The image capturing processing unit 1103 determines whether or not the authentication based on the second image data has been done successfully by the server 1030 (in Step S207).

When determining that the authentication should have been done successfully (if the answer is YES in Step S207), the image capturing processing unit 1103 performs call processing (in Step S208). Specifically, the image capturing processing unit 1103 transmits the control signal (call signal), along with the data of the image captured at the second zoom power by the image capturing unit 1011 (i.e., the second image data), to the intercom master station 1020.

On the other hand, when determining that the authentication should have failed (if the answer is NO in Step S207), the image capturing processing unit 1103 does not perform the call processing.

If the input unit 1101 determines that the button manipulation should not be holding down the button (if the answer is NO in Step S203), the image capturing processing unit 1103 performs the call processing (in Step S208). Specifically, the image capturing processing unit 1103 transmits the control signal (call signal), along with the data of the image captured at the first zoom power by the image capturing unit 1011 (i.e., the first image data), to the intercom master station 1020.

### (3-2) Zoom-power-reset related processing

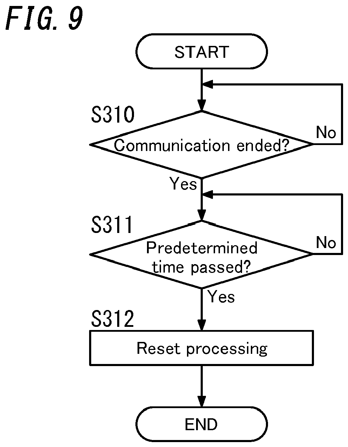

Next, zoom-power-reset related processing will be described with reference to FIG. 9.

The setting unit 1102 determines, after having changed the zoom power of the image capturing unit 1011 from the first zoom power into the second zoom power, whether or not the communication between the intercom slave unit 1010 and the intercom master station 1020 has ended (in Step S310). Specifically, when finding that speaking between the caller and the responder over the intercom slave unit 1010 and the intercom master station 1020 has ended or that the caller has canceled calling by operating the intercom slave unit 1010, the setting unit 1102 determines that the communication should have ended.

If the setting unit 1102 determines that the communication should not have ended yet (if the answer is NO in Step S310), the process waits for the communication to end.

On the other hand, when determining that the communication should have ended (if the answer is YES in Step S310), the setting unit 1102 determines whether or not a predetermined amount of time has passed since the end of the communication (in Step S311).

If the setting unit 1102 determines that the predetermined amount of time should not have passed yet since the end of the communication (if the answer is NO in Step S311), the process waits for the predetermined amount of time to pass.

On the other hand, when determining that the predetermined amount of time should have passed since the end of the communication (if the answer is YES in Step S311), the setting unit 1102 performs reset processing (in Step S312). Specifically, the setting unit 1102 changes (resets) the zoom power of the image capturing unit 1011 from the second zoom power into the first zoom power.

Optionally, the setting unit 1102 may perform the reset processing when determining in Step S310 that the communication should have ended.

### (4) Advantage

Recently, there is an increasing demand for using the image captured by an image capturing means (image capturing unit) for not only calling a resident but also various other purposes as well.

Thus, to meet such a demand, according to this embodiment, when the input unit 1101 is subjected to a different type of operation other than the call operation of instructing the intercom master station 1020 to call a resident, the image capturing unit 1011 captures an image intended to be used for a predetermined purpose. This allows an image to be captured for any intended purpose. For example, making the zoom power used by the image capturing unit 1011 in response to the call operation (i.e., the first zoom power) different from the zoom power used by the image capturing unit 1011 in response to the operation of holding down the button (i.e., in the case of performing authentication) (i.e., the second zoom power) as is done in this embodiment allows the image to be captured according to the intended purpose. When called by a caller who is operating the intercom slave unit 1010 for normal calling purposes, the resident in the residential facility 5 is able to recognize the caller even if the image of his or her face is not captured sharply. Meanwhile, when authentication processing needs to be performed, such an unsharp image of the visitor's face may cause a significant decline in the accuracy of recognition. Thus, increasing the zoom power in capturing an image for authentication purposes allows for obtaining a sharply captured face image of the caller who is operating the intercom slave unit 1010, thus increasing the accuracy of recognition significantly.

Furthermore, in the embodiment described above, even if the zoom power has been changed from the first zoom power into the second zoom power, the intercom slave unit 1010 also resets the zoom power to the first zoom power when a predetermined amount of time passes. This allows images to be captured at varying zoom powers suitable for respective purposes (including normal calling and authentication), which is beneficial compared to a situation where the zoom power is not reset after having been changed.

### (5) Variations

Variations of the second embodiment will be described.

### (5-1) First variation

In the second embodiment described above, when the operating unit 1012 is subjected to a different type of operation (or command) other than the command related to the call operation (i.e., when the button 1012a is held down), the zoom power of the image capturing unit 1011 is changed to capture an image appropriate for the authentication processing. A configuration for changing the zoom power of the image capturing unit 1011 in order to capture an image for authentication processing without operating the operating unit 1012 will be described as a variation of the second embodiment. The following description of the first variation will be focused on differences from the second embodiment. In the following description, any constituent member of this variation having the same function as a counterpart of the second embodiment described above will be designated by the same reference numeral as that counterpart's, and a detailed description thereof will be omitted herein.

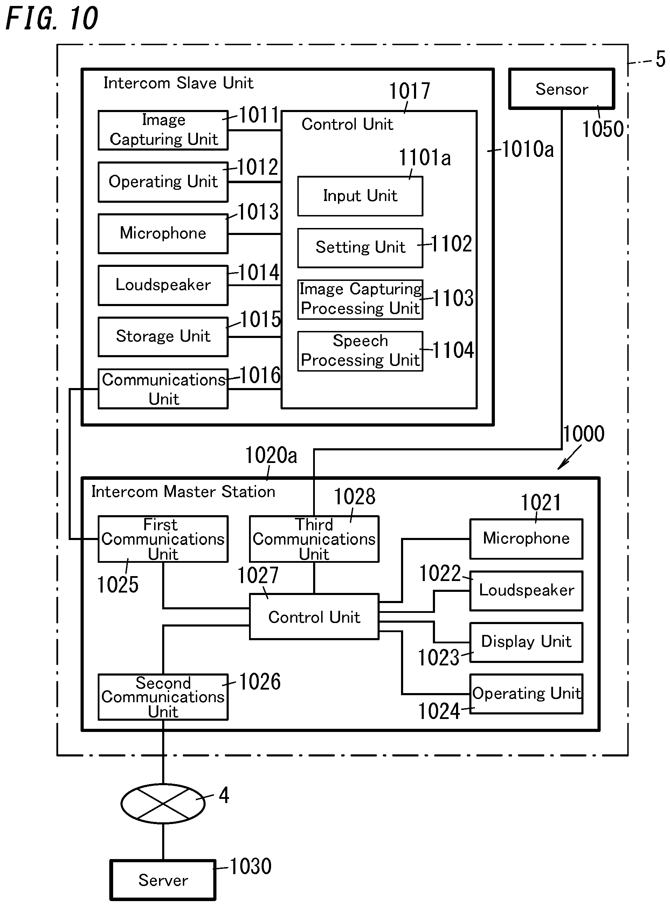

An intercom system 1000 according to this first variation includes an intercom slave unit 1010a, an intercom master station 1020a, and a sensor 1050 as shown in FIG. 10.

The sensor 1050 may be, for example, a human detection sensor for detecting any human approaching the intercom system 1000. The sensor 1050 notifies the intercom master station 1020a of the result of detection.

The intercom master station 1020a includes not only every constituent element of the intercom master station 1020 according to the second embodiment but also a third communications unit 1028 as well.

The third communications unit 1028 is a communications interface for communicating with the sensor 1050. The third communications unit 1028 receives the result of detection from the sensor 1050.

The control unit 1027 transmits the result of detection, received from the sensor 1050 via the third communications unit 1028, to the intercom slave unit 1010a via the first communications unit 1025.

The input unit 1101a of the intercom slave unit 1010a receives the result of detection by the sensor 1050, which has been transmitted from the intercom master station 1020a. The input unit 1101a of the intercom slave unit 1010a outputs, when the result of detection received indicates that a human is approaching the intercom system 1000, a second input signal to the setting unit 1102 and the image capturing processing unit 1103.

The image capturing processing unit 1103 activates, on receiving either the call initiation signal or the second input signal, the image capturing unit 1011.

The setting unit 1102 sets, on receiving the second input signal, the zoom power of the input unit 1101 at the second zoom power.

This configuration allows the intercom slave unit 1010a to capture, when receiving a different command (e.g., notification that the result of detection by the sensor 1050 indicates that a human is approaching) from the command related to the call operation, an image for authentication processing by receiving the result of detection by the sensor 1050 as command information.

Optionally, according to this variation, the zoom power of the image capturing unit 1011 may be determined by the result of detection by the sensor 1050 and the type of the operation performed on the operating unit 1012 in combination. For example, if the result of detection by the sensor 1050 indicates that a human is approaching the intercom system 1000 and if the button 1012a of the operating unit 1012 is pressed within a predetermined amount of time since the sensor 1050 has detected a human approaching the intercom system 1000, the intercom slave unit 1010 performs normal call processing. On the other hand, if the result of detection by the sensor 1050 indicates that a human is approaching the intercom system 1000 and unless the button 1012a of the operating unit 1012 is pressed within a predetermined amount of time since the sensor 1050 has detected a human approaching the intercom system 1000, the intercom slave unit 1010a transmits an image captured at the second zoom power to the server 1030 to make the server 1030 perform the authentication processing.

Optionally, the sensor 1050 of the intercom system 1000 according to this variation may be replaced with two cameras (first camera and a second camera) provided for the image capturing unit 1011. The first camera is a configured to capture an image at the first zoom power and start capturing an image when the button 1012a of the operating unit 1012 is manipulated. The second camera includes a human detection sensor for capturing an image at the second zoom power and is configured to start capturing an image when the human detection sensor detects any human approaching. In that case, if the button 1012a of the operating unit 1012 is pressed within a predetermined amount of time since the second camera has started capturing an image (i.e., since the second camera has detected any human approaching), the intercom slave unit 1010a instructs the second camera to stop capturing an image and the first camera to start capturing an image instead, thus performing normal call processing. On the other hand, unless the button 1012a of the operating unit 1012 is pressed within a predetermined amount of time since the second camera has started capturing an image, the intercom slave unit 1010a transmits the image captured by the second camera to the server 1030 via the intercom master station 1020a.

### (5-2) Second variation

The intercom system 1000 according to the second embodiment described above is configured to capture an image for the authentication processing when the button 1012a of the operating unit 1012 is held down. The intercom system 1000 according to the first variation is configured to capture an image for the authentication processing based on the result of detection by the sensor 1050. However, these are only examples and should not be construed as limiting.

Alternatively, the intercom system 1000 may also be configured to capture an image for the authentication processing when another button, provided separately from the button 1012a, is pressed.

Still alternatively, the intercom system 1000 may also be configured to capture an image for the authentication processing when a contactless communication is established. In that case, the intercom slave unit 1010 is provided with a card reader. Either a visitor or a resident living in the residential facility 5 who has come home from outside makes the card reader read information (such as a user ID) stored in the card issued to him or her in advance. On finding that the card reader has received the information read by itself, the input unit 1101 outputs the second input signal to the setting unit 1102 and the image capturing unit 1011.

Furthermore, the button 1012a does not have to be held down for a predetermined amount of time but may also be pressed at short intervals a number of times.

### (5-3) Third variation

In the second embodiment described above, the intercom slave unit 1010 is configured to change, when receiving a different type of command (operation) from the command relating to the call operation, the image capturing mode in terms of the zoom power of the image capturing unit 1011. However, this is only an example and should not be construed as limiting.

Alternatively, the intercom slave unit 1010 may also change, when receiving a different type of command (operation) from the command relating to the call operation, the image capturing mode in terms of the image capturing direction of the image capturing unit 1011. For example, if the caller who is operating the intercom slave unit 1010 (e.g., either a visitor or a resident who has come home from outside) is not located in a center area of the image capturing range of the image capturing unit 1011, then the intercom system 1000 changes the image capturing direction of the image capturing unit 1011 such that the caller's face is shifted to the center area of the image capturing range by face detection processing, for example. This allows the accuracy of the authentication to be increased because the person's face will be located in the center area of the image capturing range.

### (5-4) Fourth variation

Next, variations of the second embodiment will be enumerated one after another.

The communication between the intercom slave unit 1010 and the intercom master station 1020 may be a wireless communication.

Also, when the intercom slave unit 1010 and the intercom master station 1020 communicate with each other wirelessly, the intercom master station 1020 may be replaced with a cellphone, a smartphone, a tablet computer, or any other type of telecommunications device.

In the second embodiment described above, the intercom slave unit 1010 is configured to transmit an image captured at the second zoom power to the server 1030 via the intercom master station 1020. However, this is only an example and should not be construed as limiting. Alternatively, the intercom slave unit 1010 may also be configured to transmit an image captured at the second zoom power to the server 1030 directly, not via the intercom master station 1020.

Also, in the second embodiment described above, a predetermined condition is satisfied, for example, when a predetermined amount of time passes since the communication between the intercom slave unit 1010 and the intercom master station 1020 has ended. However, this is only an example and should not be construed as limiting. Alternatively, the predetermined condition may also be satisfied when a manipulation is performed on the button 1012a or when a reset-related instruction is received from the intercom master station 1020, for example. For example, supposing that the predetermined condition is satisfied when a manipulation is performed on the button 1012a, if the input unit 1101 determines, in Step S201 shown in FIG. 8, that some type of manipulation should have been performed, then the setting unit 1102 may determine that the predetermined condition should be satisfied. On the other hand, supposing that the predetermined condition is satisfied when a reset-related instruction is received from the intercom master station 1020, the intercom master station 1020 may determine whether or not a predetermined amount of time has passed since the end of the communication. If the answer is YES, the intercom master station 1020 transmits a reset instruction to the intercom slave unit 1010. When the input unit 1101 of the intercom slave unit 1010 receives the reset instruction, the setting unit 1102 finds the predetermined condition satisfied and changes (resets) the zoom power of the image capturing unit 1011 from the second zoom power into the first zoom power.

### (5-5) Fifth variation

The intercom system capability of the second embodiment (particularly, the capability of the intercom slave unit 1010) is applicable to the lobby intercom station of a multi-family dwelling house such as a condominium (corresponding to what is called a "mansion" in Japan). In an intercom system for a multi-family dwelling house, the lobby intercom station is configured to be able to communicate bidirectionally, via a controller, with intercom master stations provided for the respective dwelling units of the multi-family dwelling house. For example, if the capability of the intercom slave unit 1010 according to the second embodiment is applied to such a lobby intercom station, the lobby intercom station transmits an image captured at the second zoom power to the server 1030 according to the second embodiment via a controller. The server 1030 transmits the result of authentication to the lobby intercom station via the controller.

Likewise, the capability of the intercom slave unit 1010a according to the first variation of the second embodiment is also applicable to the lobby intercom station of a multi-family dwelling house such as a condominium (corresponding to what is called a "mansion" in Japan).

In this variation, it will be described how the capability of the intercom system according to the first variation of the second embodiment is applied to the lobby intercom station of a multi-family dwelling house such as a condominium, The following description will be focused on differences from the second embodiment and the first variation of the second embodiment. In the following description, any constituent member of this variation having the same function as a counterpart of the second embodiment and/or the first variation thereof described above will be designated by the same reference numeral as that counterpart's, and a detailed description thereof will be omitted as appropriate herein.

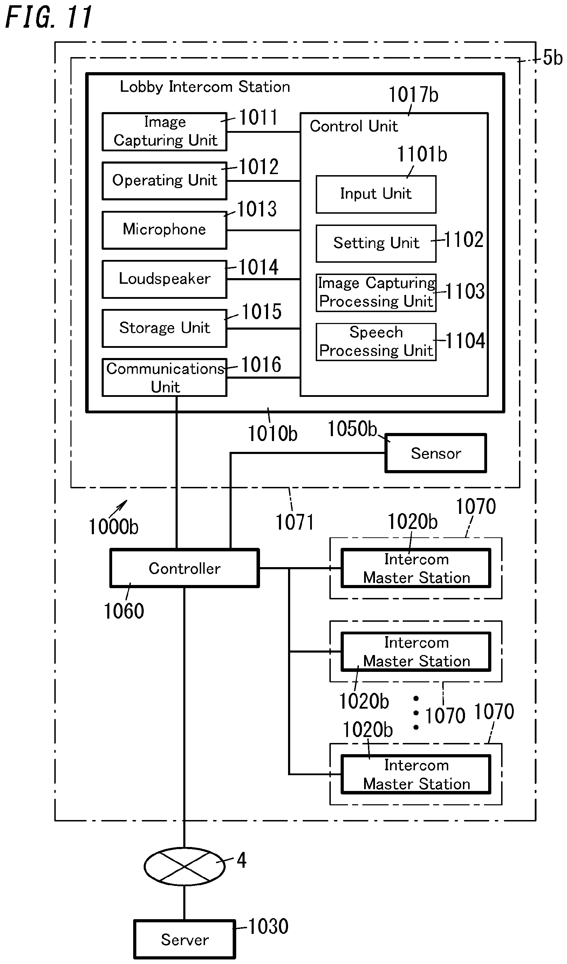

An intercom system 1000b according to this variation includes a lobby intercom station 1010b and plurality of intercom master stations 1020b, each serving as an intercom device, a sensor 1050b, and a controller 1060 as shown in FIG. 11.

The plurality of intercom master stations 1020b may be installed in respective apartments 1070, which are respective dwelling units of the multi-family dwelling house 5b, for example. Meanwhile, the lobby intercom station 1010b and the sensor 1050b are installed in a common area 1071 such as the lobby of the multi-family dwelling house. The plurality of intercom master stations 1020b and the lobby intercom station 1010b are configured to be able to communicate with each other via the controller 1060.

The sensor 1050b may be, for example, a human detection sensor for detecting any human approaching the intercom system 1000b. The sensor 1050b sends the result of detection to the lobby intercom station 1010b via the controller 1060.

The lobby intercom station 1010b includes an image capturing unit 1011, an operating unit 1012, a microphone 1013, a loudspeaker 1014, a storage unit 1015, a communications unit 1016, and a control unit 1017b as shown in FIG. 11. The lobby intercom station 1010b includes a microcomputer including a processor and a memory, for example. That is to say, the microcomputer performs the function of the control unit 1017b by making the processor execute a program stored in the memory. The program to be executed by the processor may be stored in advance in the memory of microcomputer. However, this is only an example and should not be construed as limiting. The program may also be stored in a storage medium such as a memory card or downloaded via a telecommunications line such as the Internet.

The input unit 1101b of the control unit 1017b receives the result of detection by the sensor 1050b. If the input unit 1101b finds that the result of detection indicates that a human is approaching and if the button 1012a of the operating unit 1012 is pressed within a predetermined amount of time since the reception of the result of detection, the lobby intercom station 1010b performs normal call processing. On the other hand, if the input unit 1101b finds that the result of detection by the sensor 1050b indicates that a human is approaching and if the button 1012a of the operating unit 1012 is not pressed within a predetermined amount of time since the reception of the result of detection, the lobby intercom station 1010b transmits an image captured at the second zoom power to the server 1030 via the controller 1060.

In this variation, the sensor 1050b of the intercom system 1000b may also be replaced with two cameras (first camera and second camera) provided for the image capturing unit 1011 as already described for the first variation of the second embodiment. The first camera is a configured to capture an image at the first zoom power and start capturing an image when the button 1012a of the operating unit 1012 is manipulated. The second camera includes a human detection sensor for capturing an image at the second zoom power and is configured to start capturing an image when the human detection sensor detects any human approaching. In that case, if the button 1012a of the operating unit 1012 is pressed within a predetermined amount of time since the second camera has started capturing an image (i.e., since the second camera has detected any human approaching), the lobby intercom station 1010b instructs the second camera to stop capturing an image and the first camera to start capturing an image instead, thus performing normal call processing. On the other hand, unless the button 1012a of the operating unit 1012 is pressed within a predetermined amount of time since the second camera has started capturing an image, the lobby intercom station 1010b transmits the image captured by the second camera to the server 1030 via the controller 1060.

### (Other variations)

Other variations will be described. Note that any of the variations to be described below may be adopted as appropriate in combination with any of the embodiments and their variations described above.

In the second embodiment and variations of the second embodiment described above, the intercom system 1000 (1000b) is configured to capture an image at the second zoom power to use the image for authentication processing. However, this is only an example and should not be construed as limiting. Alternatively, the intercom system 1000 (1000b) may also be configured to capture an image for any purpose other than authentication. For example, the intercom system 1000 (1000b) may also capture an image at the second zoom power to notify the other residents of the same residential facility 5 (or the same apartment1070) that a resident of the residential facility 5 has come home from outside. Alternatively, the intercom system 1000 (1000b) may also pre-store, in the server 1030, the image captured at the second zoom power and use it as a reference image for the authentication.

Furthermore, in the second embodiment and the variations of the second embodiment described above, the intercom slave unit 1010 (1010a) and the lobby intercom station 1010b, each serving as an intercom device, are configured to determine, based on the result of authentication, whether or not to perform call processing in response to the call operation. However, this is only an example and should not be construed as limiting. Alternatively, the intercom master station 1020 (1020a, 1020b) may also determine, based on the result of authentication, whether or not to perform call processing in response to the call operation.

Furthermore, in the second embodiment and the variations of the second embodiment described above, the server 1030 is configured to perform the authentication processing. However, this is only an example and should not be construed as limiting. Alternatively, the intercom slave unit 1010 (1010a) or the lobby intercom station 1010b, each serving as an intercom device, may perform the authentication processing or even the intercom master station 1020 may perform the authentication processing.

The second embodiment and variations thereof described above are some of various embodiments of the present disclosure, and may be readily modified, changed, replaced, or combined with any other embodiments, depending on a design choice or any other factor, without departing from a true spirit and scope of the present disclosure. Also, the same function as those of the intercom slave unit 1010 (1010a) and lobby intercom station 1010b, each serving as an intercom device, may be implemented as a control method, a computer program, or a non-transitory storage medium that stores the program thereon, for example. A method of controlling an intercom device according to an aspect includes an inputting step and an image capturing step. The image capturing step includes, if the inputting step includes receiving a predetermined command, different from a call command instructing a telecommunications device (such as the intercom master station 1020, 1020a, 1020b) to call a designated person, capturing an image for use for a predetermined purpose. A program according to an aspect is designed to make a computer system perform the function of the intercom device described above or the method of controlling the intercom device.

The intercom slave unit 1010 (1010a) or lobby intercom station 1010b as an intercom unit according to the present disclosure, or the agent that carries out the method of controlling the intercom unit according to the present disclosure includes a computer system. In that case, the computer system may include, as principal hardware components, a processor and a memory. The functions of the intercom unit according to the present disclosure, or the agent that carries out the method of controlling the intercom unit according to the present disclosure may be performed by making the processor execute the program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a largescale integrated circuit (LSI). Those electronic circuits may be integrated together on a single chip or distributed on multiple chips without limitation. Those multiple chips may be integrated together in a single device or distributed in multiple devices without limitation.

The function of the intercom master station 1020 (1020a, 1020b) serving as a telecommunications device may also be implemented as a control method, a computer program, or a non-transitory storage medium that stores the program thereon. A method for controlling a telecommunications device according to an aspect includes a first communicating step and a second communicating step. The first communicating step includes communicating with the intercom device described above. The second communicating step includes transmitting an image captured by an image capturing unit of the intercom device for use for a predetermined purpose to an external device other than the intercom device. A program according to an aspect is designed to make a computer system function as the telecommunications device described above.

The intercom master station 1020 (1020a, 1020b) as a telecommunications device according to the present disclosure, or the agent that carries out the method of controlling the telecommunications device according to the present disclosure includes a computer system. In that case, the computer system may include, as principal hardware components, a processor and a memory. The functions of the telecommunications device according to the present disclosure, or the agent that carries out the method of controlling the telecommunications device according to the present disclosure may be performed by making the processor execute the program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a largescale integrated circuit (LSI). Those electronic circuits may be integrated together on a single chip or distributed on multiple chips without limitation. Those multiple chips may be integrated together in a single device or distributed in multiple devices without limitation.

### (Resume)

As can be seen from the foregoing description, an intercom device according to a first aspect (intercom slave unit 1010, 1010a or lobby intercom station 1010b) includes an input unit (1101, 1101a, 1101b) and an image capturing unit (1011). When the input unit (1101, 1101a, 1101b) receives a predetermined command, which is different from a call command instructing a telecommunications device (such as an intercom master station 1020, 1020a, 1020b) to call a designated person, the image capturing unit (1011) captures an image for use for a predetermined purpose.

According to this configuration, when the input unit (1101, 1101a, 1101b) receives a predetermined command, which is different from the call command, the image capturing unit (1011) captures an image for use for a predetermined purpose. This allows the image captured by the image capturing unit (1011) to be used for not only calling a designated resident but also other purposes as well.

In an intercom device according to a second aspect, which may be implemented in conjunction with the first aspect, the predetermined command includes a command entered by a predetermined type of operation different from an operation of entering the call command that instructs the telecommunications device to call a designated person.

This configuration allows the image for use for the predetermined purpose to be captured by performing the predetermined type of operation different from the operation of entering the call command. The operator of the intercom device changing the type of operation allows the image capturing unit (1011) to switch the mode of capturing an image for use for calling purposes into the mode of capturing an image for another predetermined purpose, and vice versa.

In an intercom device according to a third aspect, which may be implemented in conjunction with the second aspect, the input unit (1101) receives a command entered by button manipulation. The predetermined operation includes an operation of holding down a button (1012a) for a predetermined amount of time or more.

This configuration allows the image capturing unit (1011) to switch, according to how long the operator of the intercom device holds down the button, the mode of capturing an image for use for calling purposes into the mode of capturing an image for another predetermined purpose, and vice versa.

In an intercom device according to a fourth aspect, which may be implemented in conjunction with any one of the first to third aspects, the input unit (1101a, 1101b) receives command information provided by an external device (such as the sensor 1050).

This configuration allows the image capturing unit (1011) to switch, in accordance with the command information provided by the external device, the mode of capturing an image for use for calling purposes into the mode of capturing an image for another predetermined purpose, and vice versa.

In an intercom device according to a fifth aspect, which may be implemented in conjunction with any one of the first to fourth aspects, the image capturing unit (1011) captures the image for use for the predetermined purpose in a second image capturing mode different from a first image capturing mode in which the telecommunications device performs a call operation or speaking is carried out with the telecommunications device.

This configuration allows the image capturing unit (1011) to capture the image for use for calling purposes and an image for use for the predetermined purpose in their respective appropriate modes.

In an intercom device according to a sixth aspect, which may be implemented in conjunction with the fifth aspect, the first image capturing mode and the second image capturing mode include angles of view at the time of capturing an image. When the input unit (1101, 1101a, 1101b) receives the predetermined command, the image capturing unit (1011) captures the image for use for the predetermined purpose at a smaller angle of view than in a situation where the telecommunications device performs the call operation or in a situation where speaking is carried out with the telecommunications device.

According to this configuration, when the input unit (1101, 1101a, 1101b) receives the predetermined command different from the call command, the image capturing unit (1011) changes the image capturing mode. This allows the image for use for calling purposes and the image for use for the predetermined purpose to be captured at respectively appropriate zoom powers.

In an intercom device according to a seventh aspect, which may be implemented in conjunction with the fifth or sixth aspect, the first image capturing mode and the second image capturing mode include an image capturing direction at the time of capturing an image. When the input unit (1101, 1101a, 1101b) receives the predetermined command, the image capturing unit (1011) captures the image for use for the predetermined purpose in a different image capturing direction from in a situation where the telecommunications device performs the call processing or in a situation where speaking is carried out with the telecommunications device.

This configuration allows the image for use for calling purposes and the image for use for the predetermined purpose to be captured in respectively appropriate image capturing directions.

In an intercom device according to an eighth aspect, which may be implemented in conjunction with any one of the fifth to seventh aspects, when the input unit (1101, 1101a, 1101b) receives the call command in a situation where a predetermined condition is satisfied after the input unit (1101, 1101a, 1101b) has received the predetermined command, the image capturing unit (1011) captures an image in the first image capturing mode.

This configuration allows the zoom power to be reset into the zoom power at which the image for use for calling purposes is captured. This allows the images to be captured at varying zoom powers suitable for respective purposes (including normal calling and authentication), which is beneficial compared to a situation where the zoom power is not reset after having been changed once.

An intercom device according to a ninth aspect, which may be implemented in conjunction with any one of the fifth to eighth aspects, further includes a setting unit (1102). The setting unit (1102) selects, in accordance with information about the command received by the input unit (1101, 1101a, 1101b), either the first image capturing mode or the second image capturing mode with respect to the image capturing unit.

This configuration allows setting to be changed automatically in accordance with information about the command received by the input unit (1101, 1101a, 1101b).

In an intercom device according to a tenth aspect, which may be implemented in conjunction with any one of the first to ninth aspects, the image capturing unit (1011) captures the image for use for the predetermined purpose as a moving image.

This configuration allows the intercom device to select, from the moving image, the best still image for use for the predetermined purpose.

A telecommunications device (such as the intercom master station 1020, 1020a, 1020b) according to an eleventh aspect includes a first communications unit (1025) and a second communications unit (1026). The first communications unit (1025) communicates with the intercom device according to any one of the first to tenth aspects. The second communications unit (1026) transmits the image for use for the predetermined purpose, captured by the image capturing unit (1011) of the intercom device, to an external device (server 1030) different from the intercom device.

This configuration allows the image captured by the image capturing unit (1011) to be used for not only calling a designated resident but also other purposes as well.

An intercom system (1000, 1000b) according to a twelfth aspect includes the intercom device according to any one of the first to tenth aspects and a telecommunications device.

This configuration allows the image captured by the image capturing unit (1011) to be used for not only calling a designated resident but also other purposes as well.

### (Third embodiment)

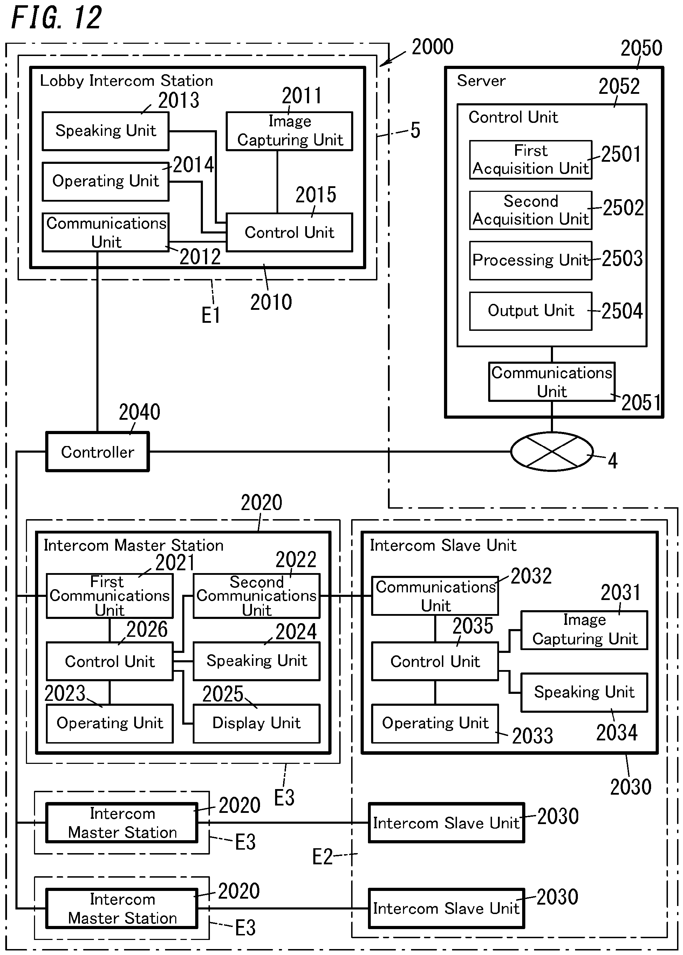

Next, an intercom system 2000 according to a third embodiment will be described with reference to FIGS. 12-14.

### (1) Overview

An intercom system 2000 according to the third embodiment includes a lobby intercom station 2010, a plurality of (e.g., three in the example illustrated in FIG. 12) intercom master stations 2020, a plurality of (e.g., three in the example illustrated in FIG. 12) intercom slave units 2030, a controller 2040, and a server 2050. In the following description of the third embodiment, a situation where the intercom system 2000 is used in a multi-family dwelling house as an exemplary facility 5 will be described as an example. In this example, the facility 5 (multi-family dwelling house) includes a first common area E1 such as a lobby, a second common area E2, and privately-owned areas E3 with a plurality of dwelling units. The second common area E2 includes passages leading from the first common area E1 to the respective main entrances of those dwelling units. The first common area E1 and the second common area E2 are separated from each other by a door, which allows people to enter the second common area E2 from the first common area E1, and vice versa.

The lobby intercom station 2010 may be installed in the first common area E1, for example. Each of the intercom master stations 2020 may be installed, for example, one by one inside of an associated one of those dwelling units (privately-owned areas E3). Each of the intercom slave unit 2030 may be installed, for example, at the outside main entrance of an associated one of the dwelling units (privately-owned areas E3). In this embodiment, the second common area E2 includes passages leading from the first common area E1 to the respective outside main entrances of those dwelling units.

The lobby intercom station 2010 and the intercom master stations 2020 are configured to be able to communicate with each other via the controller 2040. This allows the users of the intercom system 2000 according to this embodiment to speak to each other via the lobby intercom station 2010 and any of the intercom master stations 2020. In addition, the intercom master stations 2020 and the intercom slave units 2030 are also configured to communicate with each other.

In response to a call operation performed by a visitor (hereinafter sometimes referred to as a "caller"), the lobby intercom station 2010 captures an image of the visitor. In addition, the lobby intercom station 2010 also transmits a control signal (call signal) to call his or her designated resident in a specified privately-owned area E3 to an associated one of the intercom master stations 2020 via the controller 2040. The lobby intercom station 2010 transmits, when finding itself ready to communicate with the associated intercom master station 2020 as a result of operation on the intercom master station 2020, audio data of the visitor/caller to the intercom master station 2020 via the controller 2040. On the other hand, the lobby intercom station 2010 emits, when receiving audio data of the designated person who is operating the intercom master station 2020 (hereinafter referred to as a "responder") via the controller 2040, the voice of the responder based on the data received.

While the intercom master station 2020 is receiving the control signal (call signal) from the lobby intercom station 2010 (i.e., when the visitor/caller is calling the designated person through the lobby intercom station 2010), the designated resident in the specified privately-owned area E3 performs either the operation of speaking to the visitor/caller over the lobby intercom station 2010 or the operation of unlocking the lobby door.

The controller 2040 transmits, on receiving the control signal (call signal) from the lobby intercom station 2010, the control signal (call signal) to the specified intercom master station 2020. While the controller 2040 is able to communicate with the lobby intercom station 2010 and the intercom master station 2020, the controller 2040 transmits and receives the audio data of the visitor/caller and the audio data of the resident/responder. In addition, the controller 2040 also instructs the door of the lobby, for example, to be locked or unlocked in accordance with the operation performed on the intercom master station 2020.

Optionally, the controller 2040 is connectible to a network 4 such as the Internet via a gateway (not shown). This allows the controller 2040 to communicate with the server 2050 over the network 4.

In response to a call operation performed by the visitor/caller, the intercom slave unit 2030 installed outside of the specified privately-owned area E3 captures an image of the visitor/caller and transmits a control signal (call signal) to call his or her designated resident in the specified privately-owned area E3 to an associated one of the intercom master stations 2020. The intercom slave unit 2030 transmits, when finding itself ready to communicate with the associated intercom master station 2020 as a result of the operation on the intercom master station 2020, audio data of the visitor/caller to the intercom master station 2020. On the other hand, the intercom slave unit 2030 emits, when receiving audio data of the designated person who is operating the intercom master station 2020 (hereinafter referred to as a "responder"), the voice of the responder based on the data received.

The server 2050 performs authentication on the visitor based on first person information about the visitor who has called his or her designated resident in the specified privately-owned area E3 by operating the lobby intercom station 2010 and on second person information about the visitor who has called his or her designated resident in the specified privately-owned area E3 by operating the intercom slave unit 2030. In this embodiment, the first person information is an image (hereinafter referred to as a "first image") of the visitor captured by the lobby intercom station 2010, and the second person information is an image (hereinafter referred to as a "second image") of the visitor captured by the intercom slave unit 2030. The first image and the second image are each given a timestamp of image capturing.

The server 2050 transmits the result of the authentication to the intercom master station 2020 over the network 4 and via the controller 2040.

The intercom master station 2020 determines, based on the result of the authentication, whether or not to accept the call for the resident.

### (2) Configuration

### (2-1) Lobby intercom station

The lobby intercom station 2010 includes an image capturing unit 2011, a communications unit 2012, a speaking unit 2013, an operating unit 2014, and a control unit 2015 as shown in FIG. 12.

The lobby intercom station 2010 includes a microcomputer including a processor and a memory, for example. That is to say, the microcomputer performs the function of the control unit 2015 by making the processor execute a program stored in the memory. The program to be executed by the processor may be stored in advance in the memory of microcomputer. However, this is only an example and should not be construed as limiting. The program may also be stored in a storage medium such as a memory card or downloaded via a telecommunications line such as the Internet.

The image capturing unit 2011 may be implemented as a camera including an image capture device such as a CCD image sensor, a CMOS image sensor, or any other two-dimensional image sensor for shooting the subject (such as a visitor). In this embodiment, the image capturing area (view) of the image capturing unit 2011 is set in front of the lobby intercom station 2010 such that when a visitor is operating the lobby intercom station 2010, at least his or her face may be shot. In this embodiment, the image capturing unit 2011 is a camera for shooting a moving image (video). However, this is only an example and should not be construed as limiting. The image capturing unit 2011 may also be a camera for shooing a still image. Also, even though the image capturing unit 2011 of this embodiment is a camera for shooting a color image, the image capturing unit 2011 may be a camera for shooting a monochrome image as well.

The communications unit 2012 includes a communications interface for communicating with the intercom master station 2020 via the controller 2040. In this embodiment, the communications unit 2012 is configured to be able to communicate bidirectionally with the intercom master stations 2020 such that an audio signal and a control signal may be transmitted bidirectionally between the lobby intercom station 2010 and the intercom master station 2020.

The speaking unit 2013 includes a loudspeaker and a microphone and is configured to communicate with the intercom master stations 2020.

The operating unit 2014 is subjected to the visitor's operation to call his or her designated resident. When a predetermined type of operation (such as pressing a button) is done on the operating unit 2014, the lobby intercom station 2010 activates the image capturing unit 2011 and makes the image capturing unit 2011 start capturing images. In addition, the lobby intercom station 2010 also transmits a control signal (call signal) to call the resident in the specified privately-owned area (dwelling unit) E3 to the associated intercom master station 2020 via the communications unit 2012 and the controller 2040.

The control unit 2015 activates, when the operating unit 2014 is subjected to a predetermined type of operation, the image capturing unit 2011, i.e., starts supplying power to the image capturing unit 2011. In addition, the control unit 2015 further transmits the control signal (or call signal) to the intercom master station 2020 via the communications unit 2012 and the controller 2040.

When receiving the audio data of the visitor (an audio signal) from the microphone of the speaking unit 2013 while getting ready to communicate with the intercom master station 2020, the control unit 2015 transmits the audio signal received to the intercom master station 2020 via the communications unit 2012 and the controller 2040. On the other hand, when receiving the audio data of the resident (an audio signal) from the intercom master station 2020 while getting ready to communicate with the intercom master station 2020, the control unit 2015 transmits the audio signal received to the loudspeaker of the speaking unit 2013. At this time, the loudspeaker emits the voice based on the audio signal received.

The control unit 2015 transmits the first image captured by the image capturing unit 2011 to the intercom master station 2020 in the specified privately-owned area E3 via the communications unit 2012 and the controller 2040. In this case, the intercom master station 2020 transmits the first image received from the lobby intercom station 2010 to the server 2050 via the controller 2040. Thus, it can be said that the control unit 2015 transmits the first image captured by the image capturing unit 2011 to the server 2050.

### (2-2) Intercom master station

The intercom master station 2020 includes a first communications unit 2021, a second communications unit 2022, an operating unit 2023, a speaking unit 2024, a display unit 2025, and a control unit 2026 as shown in FIG. 12.

The intercom master station 2020 includes a microcomputer including a processor and a memory, for example. That is to say, the microcomputer performs the function of the control unit 2026 by making the processor execute a program stored in the memory. The program to be executed by the processor may be stored in advance in the memory of microcomputer. However, this is only an example and should not be construed as limiting. The program may also be stored in a storage medium such as a memory card or downloaded via a telecommunications line such as the Internet.

The first communications unit 2021 is a communications interface for communicating with the controller 2040. The first communications unit 2021 is connected to the lobby intercom station 2010 and the network 4 via the controller 2040. The first communications unit 2021 receives, for example, the image (data of the first image) transmitted from the lobby intercom station 2010. In addition, the first communications unit 2021 is configured to be able to communicate bidirectionally with the lobby intercom station 2010 such that an audio signal and the control signal may be transmitted bidirectionally between the lobby intercom station 2010 and the intercom master station 2020. The first communications unit 2021 also transmits the first image received from the intercom master device 2020 to the server 2050 via the controller 2040 and over the network 4. The first communications unit 2021 receives the result of the authentication performed by the server 2050 from the server 2050 via the controller 2040 and over the network 4.

The second communications unit 2022 is a communications interface for communicating with the intercom slave unit 2030. The second communications unit 2022 is electrically connected to the intercom slave unit 2030 through a two-wire transmission line such as a twisted pair of wires.

The operating unit 2023 accepts the resident's operation in the specified privately-owned area E3. When a predetermined type of operation (such as pressing a button) is done on the operating unit 2023 while the first communications unit 2021 is receiving the control signal (call signal) to call the designated resident from the lobby intercom station 2010, the intercom master station 2020 and the lobby intercom station 2010 are ready to communicate with each other. When the operation of unlocking the lobby door is performed while the first communications unit 2021 is receiving the call signal from the lobby intercom station 2010 or while the intercom master station 2020 is ready to communicate with the lobby intercom station 2010, an unlock signal is transmitted to the controller 2040.

When a predetermined type of operation (such as pressing a button) is done on the operating unit 2023 while the second communications unit 2022 is receiving the control signal (call signal) to call the designated resident from the intercom slave unit 2030, the intercom master station 2020 and the intercom slave unit 2030 are ready to communicate with each other.

The speaking unit 2024 includes a loudspeaker and a microphone and is configured to communicate with the lobby intercom station 2010 and the intercom slave unit 2030.

The display unit 2025 displays the image transmitted from the lobby intercom station 2010 and the image transmitted from the intercom slave unit 2030. The display unit 2025 also displays the result of the authentication performed by the server 2050.

On receiving the control signal (call signal) and the first image from the lobby intercom station 2010 via the first communications unit 2021, the control unit 2026 outputs the audio data of a ringing tone such as a chime to the loudspeaker of the speaking unit 2024 and outputs the first image to the display unit 2025. In this manner, the control unit 2026 makes the loudspeaker of the speaking unit 2024 emit the ringing tone and makes the display unit 2025 display the first image. The control unit 2026 further transmits the first image to the server 2050 via the first communications unit 2021 and the controller 2040.

On receiving the control signal (call signal) and the second image (second image data) from the intercom slave unit 2030 via the second communications unit 2022, the control unit 2026 outputs the second image to the server 2050 via the first communications unit 2021 and the controller 2040.

The control unit 2026 receives, via the controller 2040 and the first communications unit 2021, result information, indicating the result of the authentication performed by the server 2050, as information about the privately-owned area E3 in which the intercom master station 2020 is provided. The result information includes at least one of a notification to the resident in the privately-owned area E3 or information concerning the call for the resident in the privately-owned area E3. In this embodiment, the result information includes both of the notification to the resident in the privately-owned area E3 and information concerning the call for the resident in the privately-owned area E3.

The control unit 2026 controls, in accordance with the result information received from the server 2050, emission of the ringing tone through the loudspeaker of the speaking unit 2024 and display of the information on the display unit 2025.

### (2-3) Intercom slave unit

Next, a configuration for the intercom slave unit 2030 will be described. The intercom slave unit 2030 includes an image capturing unit 2031, a communications unit 2032, an operating unit 2033, a speaking unit 2034, and a control unit 2035 as shown in FIG. 12.

The intercom slave unit 2030 includes a microcomputer including a processor and a memory, for example. That is to say, the microcomputer performs the function of the control unit 2035 by making the processor execute a program stored in the memory. The program to be executed by the processor may be stored in advance in the memory of microcomputer. However, this is only an example and should not be construed as limiting. The program may also be stored in a storage medium such as a memory card or downloaded via a telecommunications line such as the Internet.

The image capturing unit 2031 may be implemented as a camera including an image capture device such as a CCD image sensor, a CMOS image sensor, or any other two-dimensional image sensor for shooting the subject (such as a visitor). In this embodiment, the image capturing area (view) of the image capturing unit 2031 is set in front of the intercom slave unit 2030 such that when a caller such as a visitor is operating the intercom slave unit 2030, at least his or her face may be shot. In this embodiment, the image capturing unit 2031 is a camera for shooting a moving image (video). However, this is only an example and should not be construed as limiting. The image capturing unit 2031 may also be a camera for shooing a still image. Also, even though the image capturing unit 2031 of this embodiment is a camera for shooting a color image, the image capturing unit 2031 may be a camera for shooting a monochrome image as well.

The communications unit 2032 is a communications interface for communicating with the intercom master station 2020. The communications unit 2032 is electrically connected to the intercom master station 2020 through a two-wire transmission line such as a twisted pair of wires. The communications unit 2032 transmits the image data of the image captured by the image capturing unit 2031 to the intercom master station 2020. The communications unit 2032 is configured to be able to communicate bidirectionally with the intercom master station 2020 such that an audio signal may be transmitted bidirectionally between the intercom slave unit 2030 and the intercom master station 2020.

The operating unit 2033 is subjected to the operation performed by the visitor to call his or her designated resident. When a predetermined operation (such as pressing the button) is performed on the operating unit 2033, the intercom slave unit 2030 activates the image capturing unit 2031 to instruct the image capturing unit 2031 to start capturing images. In addition, the intercom slave unit 2030 also transmits a control signal (call signal) to call the designated resident in the privately-owned area E3 to the intercom master station 2020 via the communications unit 2032.

The speaking unit 2034 includes a loudspeaker and a microphone, and is configured to communicate with the intercom master station 2020.

The control unit 2035 activates the image capturing unit 2031 when the operating unit 2033 is subjected to the predetermined operation. In other words, the control unit 2035 starts supplying power to the image capturing unit 2031. The control unit 2035 further transmits the control signal (call signal) to the intercom master station 2020 via the communications unit 2032.

When receiving the audio data of the visitor (an audio signal) from the microphone of the speaking unit 2034 while getting ready to communicate with the intercom master station 2020, the control unit 2035 transmits the audio signal received to the intercom master station 2020 via the communications unit 2032. On the other hand, when receiving the audio data of the resident (an audio signal) from the intercom master station 2020 while getting ready to communicate with the intercom master station 2020, the control unit 2035 transmits the audio signal received to the loudspeaker of the speaking unit 2034. At this time, the loudspeaker emits the voice based on the audio signal received.

The control unit 2035 transmits the second image captured by the image capturing unit 2031 to the intercom master station 2020 via the communications unit 2032. In response, the intercom master station 2020 forwards the second image, received from the intercom slave unit 2030, to the server 2050 via the controller 2040. Thus, it can be said that the control unit 2035 transmits the second image, captured by the image capturing unit 2031, to the server 2050.

### (2-4) Server

The server 2050 includes a communications unit 2051 and a control unit 2052.

The server 2050 includes a microcomputer including a processor and a memory, for example. That is to say, the microcomputer performs the function of the control unit 2052 by making the processor execute a program stored in the memory. The program to be executed by the processor may be stored in advance in the memory of microcomputer. However, this is only an example and should not be construed as limiting. The program may also be stored in a storage medium such as a memory card or downloaded via a telecommunications line such as the Internet.

The communications unit 2051 is a communications interface for communicating with the intercom master stations 2020 over the network 4 and via the controller 2040.

The control unit 2052 includes a first acquisition unit 2501, a second acquisition unit 2502, a processing unit 2503, and an output unit 2504, as shown in FIG. 12.

The first acquisition unit 2501 acquires (or receives) the first image, captured by the lobby intercom station 2010, from the intercom master station 2020 via the controller 2040. The first acquisition unit 2501 stores the first image thus acquired in a predetermined storage area in association with an image capturing time.

The second acquisition unit 2502 acquires (or receives) the second image, captured by the intercom slave unit 2030, from the intercom master station 2020 via the controller 2040.

As soon as the second acquisition unit 2502 receives the second image, the processing unit 2503 retrieves, from the predetermined storage area, all of the first images that have been captured during a predetermined period preceding the time when the second image was captured. The processing unit 2503 performs authentication processing using all of the first images retrieved and the second image received by the second acquisition unit 2502. Specifically, the processing unit 2503 performs the authentication processing based on the faces of the persons shot in the first images (i.e., the persons who have operated the lobby intercom station 2010 in the past) retrieved from the predetermined storage area and the face of the person shot in the second image (i.e., the person who is operating the intercom slave unit 2030 now).

The processing unit 2503 compares all of the first images retrieved from the predetermined storage area and the second image received by the second acquisition unit 2502 with each other. On finding, based on one of all of those first images, the person shot in that first image identical with the person shot in the second image, the processing unit 2503 determines that the authentication should have been done successfully. As used herein, when one thing is "identical with" another, those two things may naturally be perfectly identical with each other but may also be substantially the same with only a minor difference falling within a tolerance range.

When finding the person shot in the second image not identical with any of the persons shot in those first images retrieved from the predetermined storage area, the processing unit 2503 determines that the authentication should have failed. For example, when finding that the person shot in the second image is not identical with any of the persons shot in the first images that have been captured within a predetermined period preceding the time when the second image was captured, the processing unit 2503 determines that the authentication should have failed.

The processing unit 2503 generates, if the authentication has been done successfully, result information including the result of the authentication, a first notification to the resident in the privately-owned area E3, and first call information about the call for the resident in the privately-owned area E3. As used herein, the "first notification" is a notification indicating that the caller who has operated the lobby intercom station 2010 is identical with the caller who is operating the intercom slave unit 2030, and the first call information is a piece of information instructing the intercom master station 2020 to perform the call processing.

The processing unit 2503 generates, if the authentication has failed, result information including the result of the authentication, a second notification to the resident in the privately-owned area E3, and second call information about the call for the resident in the privately-owned area E3. As used herein, the "second notification" is a notification indicating that the caller who has operated the lobby intercom station 2010 is not identical with the caller who is operating the intercom slave unit 2030, and the second call information is a piece of information instructing the intercom master station 2020 not to perform the call processing.

That is to say, the result information includes, depending on the result of the authentication, either a set of the first notification information and the first call information or a set of the second notification information and the second call information. In other words, each of the first notification information, the first call information, the second notification information, and the second call information is a piece of information based on the result of the authentication.

The output unit 2504 outputs, based on the first image providing the first person information and the second image providing the second person information, the result information as information about the privately-owned area E3.

### (2-5) Controller

Next, the controller 2040 will be described. The controller 2040 includes a communications interface for communicating with the lobby intercom station 2010 and the intercom master stations 2020. The controller 2040 also includes a communications interface for communicating with the server 2050 over the network 4.

On receiving the call signal, the first image captured by the image capturing unit 2011, and an audio signal representing the visitor's voice from the lobby intercom station 2010, the controller 2040 forwards these signals and image to the intercom master station 2020. On receiving the audio signal representing the voice received by the intercom master station 2020, the controller 2040 forwards the signal to the lobby intercom station 2010.

Furthermore, on receiving the first image from the intercom master station 2020, the controller 2040 forwards the first image to the server 2050. On receiving the second image from the intercom master station 2020, the controller 2040 forwards the second image to the server 2050. On receiving the result information from the server 2050, the controller 2040 forwards the information to the intercom master station 2020.

The controller 2040 further controls locking and unlocking of the lobby door. For example, on receiving an unlocking signal from the intercom master station 2020, the controller 2040 unlocks the lobby door. When a predetermined amount of time passes after that, the controller 2040 locks the door again.

### (3) Operation

### (3-1) Overall operation

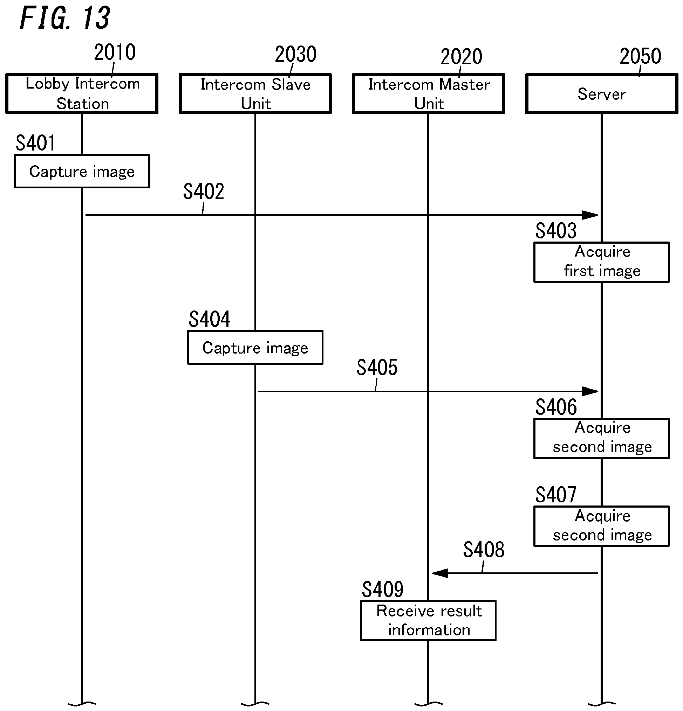

Next, the operation of the intercom system 2000 will be described with reference to the sequence chart shown in FIG. 13. Note that the communication between the lobby intercom station 2010 and the intercom master station 2020 and the communication between the intercom master station 2020 and the server 2050 are actually carried out via the controller 2040 but illustration of the controller 2040 is omitted in FIG. 13.

First, when the operating unit 2014 is subjected to a predetermined operation, the control unit 2015 of the lobby intercom station 2010 activates the image capturing unit 2011 to make the image capturing unit 2011 capture an image (in Step S401).

The control unit 2015 transmits the first image captured by the image capturing unit 2011 to the server 2050 via the intercom master station 2020 (in Step S402). In this processing step, the intercom master station 2020 receives not only the first image but also a control signal (call signal) as well, and performs call processing.

The first acquisition unit 2501 of the server 2050 acquires the first image transmitted from the lobby intercom station 2010 (in Step S403).

The control unit 2035 of the intercom slave unit 2030 activates, when the operating unit 2033 is subjected to the predetermined operation, the image capturing unit 2031 to make the image capturing unit 2031 capture an image (in Step S404).

The control unit 2035 transmits the second image captured by the image capturing unit 2031 to the server 2050 via the intercom master station 2020 (in Step S405). In this processing step, the intercom master station 2020 receives not only the second image but also the control signal (call signal) as well.

The second acquisition unit 2502 of the server 2050 acquires the second image transmitted from the intercom slave unit 2030 (in Step S406).

The processing unit 2503 of the server 2050 acquires all of the first images that have been captured during a predetermined period preceding the time when the second image was captured to authenticate the visitor based on all of the first images acquired and the second image acquired by the second acquisition unit 2502 (in Step S407). On finding, based on one of all of those first images acquired, the person shot in that first image identical with the person shot in the second image, the processing unit 2503 determines that the authentication should have been done successfully. On the other hand, on finding the person shot in the second image not identical with any of the persons shot in the first images, the processing unit 2503 determines that the authentication should have failed.

The output unit 2504 of the server 2050 transmits result information, including at least the result of the authentication, to the intercom master station 2020 (in Step S408). Specifically, if the authentication has been done successfully, the output unit 2505 transmits result information, including the result of the authentication, a first notification to the resident in the privately-owned area E3, and first call information about the call for the resident in the privately-owned area E3. On the other hand, if the authentication has failed, the output unit 2504 transmits result information, including the result of the authentication, a second notification to the resident in the privately-owned area E3, and second call information about the call for the resident in the privately-owned area E3.

The control unit 2026 of the intercom master station 2020 receives the result information from the server 2050 (in Step S409). The control unit 2026 determines, in accordance with the information included in the result information, whether or not to accept the call operation and perform call processing.

### (3-2) Call processing

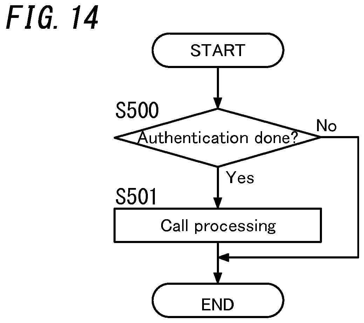

Next, it will be described with reference to the flowchart of FIG. 14 how the intercom master station 2020 performs call processing in accordance with the result information received from the server 2050.

On receiving the result information from the server 2050 in Step S409 shown in FIG. 13, the control unit 2026 of the intercom master station 2020 determines, based on the result information, whether or not the authentication has been done successfully (in Step S500).

When determining that the authentication should have been done successfully (if the answer is YES in Step S500), the control unit 2026 performs the call processing (in Step S501). Specifically, in accordance with the first notification included in the result information, the control unit 2026 displays, on the display unit 2025, a message indicating that the visitor who has been authenticated through the communication between the lobby intercom station 2010 and the intercom master station 2020 itself is currently at the doorway to the privately-owned area E3. In addition, in accordance with the first call information included in the result information, the control unit 2026 has a ringing tone (such as a chime) emitted through the loudspeaker of the speaking unit 2024.

On the other hand, when determining that the authentication should have failed (if the answer is NO in Step S500), the control unit 2026 does not perform the call processing. In that case, the control unit 2026 does not allow the loudspeaker of the speaking unit 2024 to emit the ringing tone. Instead, the control unit 2026 may display, on the display unit 2025, a message indicating that a visitor who has not been authenticated through the communication between the lobby intercom station 2010 and the intercom master station 2020 itself is currently present at the doorway to the privately-owned area E3.

### (4) Advantages

An intercom system for use in multi-family dwelling houses, for example, has been known in the art (see, for example, JP 2004-64249 A (hereinafter referred to as D2)). The intercom system of D2 includes a lobby intercom station installed at a common main entrance of a multi-family dwelling house, intercom master stations installed in respective dwelling units, and intercom slave units installed at the respective outside main entrances of the dwelling units. In such an intercom system, a visitor uses the lobby intercom station to call a specified one of the intercom master stations. The resident of the specified dwelling unit unlocking the common main entrance door in response to the call allows the visitor to enter the multi-family dwelling house through the common main entrance door. Thereafter, when arriving at his or her specified dwelling unit, the visitor uses the intercom slave unit at the door of that dwelling unit to call the associated intercom master station again.

In known intercom system like this, however, when a visitor arrives at the common main entrance (first common area), the common main entrance door may be already unlocked. This situation arises when another visitor is passing through the common main entrance door to enter the multi-family dwelling house (the second common area). In that case, the former visitor does not perform the operation of using the lobby intercom station to call one of the intercom master stations but enters the multi-family dwelling house to use the intercom slave unit at the door of the target dwelling unit (in the privately-owned area) for calling the intercom master station. If the resident of the dwelling unit responded carelessly to the call from the intercom slave unit even though he or she has not performed the operation of unlocking the common main entrance door by him- or herself, some problem could arise in terms of security.

Thus, to overcome such a problem, the intercom system 2000 according to this embodiment performs the authentication based on the first image captured by the lobby intercom station 2010 and the second image captured by the intercom slave unit 2030 to determine, based on the result of the authentication, whether or not to accept the call operation and perform the call processing. The intercom master station 2020 performs the call processing only when the visitor, who has passed through the main entrance door through the communication between the lobby intercom station 2010 and the intercom master station 2020, is performing a call operation on the intercom slave unit 2030, thus increasing the degree of security.

In addition, this eliminates the need to store, in advance, images to be used for authentication purposes, thus saving the storage capacity as well.

### (5) Variations

Variations of the third embodiment will be enumerated one after another. Note that any of the variations to be described below may be adopted as appropriate in combination with the embodiment described above.

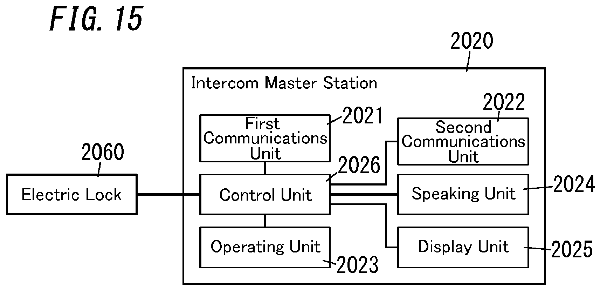

In the third embodiment described above, the intercom master station 2020 is configured to control, based on the result of the authentication by the server 2050, the emission of the ringing tone and the display of messages. However, this is only an example and should not be construed as limiting. Alternatively, the intercom master station 2020 may also control unlocking of the entrance door in the privately-owned area E3 based on the result of the authentication by the server 2050. For example, an electric lock 2060 (see FIG. 15) may be provided at the entrance door in the privately-owned area E3. If the authentication is done successfully, the server 2050 transmits result information, including unlocking information instructing the electric lock 1060 to be unlocked, to the intercom master station 2020. On the other hand, if the authentication has failed, the server 2050 transmits result information, including locking information instructing the electric lock 1060 to be kept locked, to the intercom master station 2020. When finding that the result information includes the unlocking information, the intercom master station 2020 transmits an unlocking signal, instructing the electric lock 2060 to be unlocked, to the electric lock 2060. On receiving the unlocking signal, the electric lock 2060 opens the lock. When finding that the result information includes the locking information, on the other hand, the intercom master station 2020 does not instruct the electric lock 2060 to be unlocked.

Also, in the third embodiment described above, the intercom system 2000 performs the authentication using the first image captured by the lobby intercom station 2010 and the second image captured by the intercom slave unit 2030. However, this is only an example and should not be construed as limiting. Alternatively, the intercom system 2000 may also perform the authentication using the visitor's voice. In that case, when a predetermined operation is performed, the lobby intercom station 2010 acquires the voice of the visitor (i.e., the caller who is operating the lobby intercom station 2010). Likewise, when a predetermined operation is performed, the intercom slave unit 2030 also acquires the voice of the visitor (i.e., the caller who is operating the intercom slave unit 2030). The server 2050 performs the authentication based on the voice acquired by the lobby intercom station 2010 and the voice acquired by the intercom slave unit 2030.

Optionally, the intercom system 2000 may perform the authentication using both the image and the voice as well.

In the third embodiment described above, the lobby intercom station 2010 is configured to transmit the first image captured to the server 2050 via both the controller 2040 and the intercom master station 2020. However, this is only an example and should not be construed as limiting. Alternatively, the lobby intercom station 2010 may also transmit the first image captured to the server 2050 via only the controller 2040, not via the intercom master station 2020. Still alternatively, the lobby intercom station 2010 may transmit the first image captured to the server 2050 directly, via neither the intercom master station 2020 nor the controller 2040.

Furthermore, in the third embodiment described above, the intercom slave unit 2030 transmits the second image captured to the server 2050 via both the controller 2040 and the intercom master station 2020. However, this is only an example and should not be construed as limiting. Alternatively, the intercom slave unit 2030 may transmit the second image captured to the server 2050 directly, via neither the intercom master station 2020 nor the controller 2040.

In the third embodiment described above, the lobby intercom station 2010 may include a human detection sensor. In that case, when the human detection sensor detects any human approaching the lobby intercom station 2010, the lobby intercom station 2010 activates the image capturing unit 2011 to make the image capturing unit 2011 start capturing an image. Likewise, the intercom slave unit 2030 may also include a human detection sensor. In that case, when the human detection sensor detects any human approaching the intercom slave unit 2030, the intercom slave unit 2030 activates the image capturing unit 2031 to make the image capturing unit 2031 start capturing an image.

The communication between the controller 2040 and the intercom master station 2020 and the communication between the intercom master station 2020 and the intercom slave unit 2030 may each be a wireless communication. When the controller 2040 and the intercom master station 2020 communicate with each other wirelessly and when the intercom master station 2020 and the intercom slave unit 2030 communicate with each other wirelessly, the intercom system 2000 may be configured to use a cellphone, a smartphone, a tablet computer, or any other telecommunications device instead of the intercom master station 2020.

Furthermore, in the third embodiment described above, the server 2050 performs the authentication processing. However, this is only an example and should not be construed as limiting. Alternatively, any of the lobby intercom station 2010, the intercom master station 2020, or the intercom slave unit 2030 may perform the authentication processing instead.

Furthermore, in the third embodiment described above, the first image may be used for performing the authentication to decide whether or not to open the door through which visitors go from the first common area E1 into the second common area E2, and vice versa (hereinafter referred to as "opening/closing authentication"). For example, the server 2050 may store, in advance, a plurality of images representing the faces of past visitors (hereinafter referred to as "authentication images"). On acquiring the first image, the server 2050 compares the first image with the plurality of authentication images to determine whether or not the visitor shot in the first image is any one of the pre-registered visitors. If the answer is YES, the server 2050 determines that the authentication should have been done successfully and transmits first instruction information instructing the door to be unlocked to the controller 2040. On receiving the first instruction information, the controller 2040 unlocks the door. On the other hand, when finding that the visitor is not any one of the pre-registered visitors, the server 2050 determines that the authentication should have failed and transmits second instruction information instructing the door to be kept locked to the controller 2040. On receiving the second instruction information, the controller 2040 does not unlock the door. In the embodiment described above, the authentication using the first image and the second image (hereinafter referred to as "calling authentication") and the opening/closing authentication are performed by the server 2050. However, this is only an example and should not be construed as limiting. Alternatively, the calling authentication and the opening/closing authentication may also be performed by two different devices or servers. For example, the calling authentication may be performed by the server 2050 and the opening/closing authentication may be performed by any one of the lobby intercom station 2010, the intercom master station 2020, the intercom slave unit 2030, or another server. Conversely, the opening/closing authentication may be performed by the server 2050 and the calling authentication may be performed by any one of the lobby intercom station 2010, the intercom master station 2020, the intercom slave unit 2030, or another server.

In the third embodiment described above, the authentication processing is performed based on the first image captured by the lobby intercom station 2010 and the second image captured by the intercom slave unit 2030. However, this is only an example and should not be construed as limiting. Alternatively, the authentication processing may include not only the authentication based on the images but also the processing of determining whether the intercom master station 2020 that has transmitted the first image is identical with the intercom master station 2020 that has transmitted the second image. In that case, when finding the person shot in the second image identical with the person shot in one of all of the first images that have been captured during a predetermined period preceding the time when the second image was captured, the processing unit 2503 of the server 2050 compares the sources of the first and second images with each other. Specifically, the processing unit 2503 determines whether the source of the first image agrees with the source of the second image. When finding their sources agreeing with each other, the processing unit 2503 determines that the authentication should have been done successfully. On the other hand, when finding their sources disagreeing with each other, the processing unit 2503 determines that the authentication should have failed. Note that as already described for the third embodiment, when finding the person shot in the second image not identical with any of the persons shot in the first images that have been captured during a predetermined period preceding the time when the second image was captured, the processing unit 2503 may determine that the authentication should have failed.

Still alternatively, the authentication processing does not have to be the authentication based on the images but may be the processing of determining whether the intercom master station 2020 that has transmitted the first image is identical with the intercom master station 2020 that has transmitted the second image. In that case, when finding the source of the second image agreeing with the source of one of all of the first images that have been captured during a predetermined period preceding the time when the second image was captured, the processing unit 2503 of the server 2050 determines that the authentication should have been done successfully. On the other hand, when finding the source of the second image not agreeing with the source of any of the first images that have been captured during a predetermined period preceding the time when the second image was captured, the processing unit 2503 determines that the authentication should have failed.

Furthermore, in the third embodiment described above, the output unit 2504 of the server 2050 may output only the authentication result to the intercom master station 2020. In that case, if the authentication result indicates that the authentication has been done successfully, the control unit 2026 of the intercom master station 2020 outputs the data of a message corresponding to the first notification (hereinafter referred to as a "first message") to the display unit 2025 to have the first message displayed on the display unit 2025. In addition, to have the ringing tone emitted through the loudspeaker of the speaking unit 2024, the control unit 2026 also outputs data about the ringing tone to the loudspeaker. In this case, the control unit's 2026 capability of outputting the data of the first message to the display unit 2025 and the control unit's 2026 capability of outputting the data about the ringing tone to the loudspeaker correspond to the output unit of the present disclosure. Optionally, if the authentication has been done successfully, the intercom master station 2020 may output only the ringing tone. On the other hand, if the authentication result indicates that the authentication has failed, the control unit 2026 of the intercom master station 2020 outputs the data of a message corresponding to the second notification (hereinafter referred to as a "second message") to the display unit 2025 to have the second message displayed on the display unit 2025. In that case, the control unit 2026 does not have the ringing tone emitted through the loudspeaker of the speaking unit 2024. In this case, the control unit's 2026 capability of outputting the data of the second message to the display unit 2025 corresponds to the output unit of the present disclosure. Optionally, if the authentication has failed, a voice message indicating that the authentication has failed and/or a voice message indicating that the person who is operating the lobby intercom station 2010 is not identical with the person who is operating the intercom slave unit 2030 may be emitted as voice message(s) through the loudspeaker of the speaking unit 2024. In that case, the control unit 2026 outputs audio data representing the message to the loudspeaker. Then, the control unit's 2026 capability of outputting the audio data to the loudspeaker corresponds to the output unit of the present disclosure.

Alternatively, the output unit 2504 of the server 2050 may output only the authentication result to the controller 2040. In that case, the controller 2040 outputs the first notification and the first call information to the intercom master station 2020 if the authentication result indicates that the authentication has been done successfully, and outputs the second notification and the second call information to the intercom master station 2020 if the authentication result indicates that the authentication has failed. In that case, the controller's 2040 capability of outputting, according to the authentication result, either the combination of the first notification and the first call information or the combination of the second notification and the second call information to the intercom master station 2020 corresponds to the output unit of the present disclosure.

Still alternatively, the output unit 2504 of the server 2050 may output the authentication result to an additional server. In that case, the additional server transmits (outputs) the first notification and the first call information to the intercom master station 2020 over the network 4 if the authentication result indicates that the authentication has been done successfully, and transmits (outputs) the second notification and the second call information to the intercom master station 2020 over the network 4 if the authentication result indicates that the authentication has failed. In that case, the additional server's capability of transmitting (outputting), according to the authentication result, either the combination of the first notification and the first call information or the combination of the second notification and the second call information to the intercom master station 2020 corresponds to the output unit of the present disclosure.

That is to say, the capability of outputting, according to the result of the authentication based on the first image and the second image, at least one of information instructing the display unit 2025 to display the message or information instructing the loudspeaker of the speaking unit 2024 to emit the ringing tone or the voice corresponds to the output unit of the present disclosure. Optionally, the output unit according to the present disclosure may cover the display unit 2025 and the loudspeaker of the speaking unit 2024.

The third embodiment described above is only one of various embodiments of the present disclosure, and may be readily modified, changed, replaced, or combined with any other embodiments, depending on a design choice or any other factor, without departing from a true spirit and scope of the present disclosure. Also, the same function as that of the intercom system 2000 may be implemented as a processing method, a computer program, or a non-transitory storage medium that stores the program thereon, for example. A method of processing the intercom system 2000 according to an aspect is applicable to an intercom system 2000 for use in a facility 5 including a plurality of privately-owned areas E3, a first common area E1, and a second common area E2 provided in a passage leading from the first common area E1 to the plurality of privately-owned areas E3. The method of processing the intercom system 2000 includes a first acquisition step, a second acquisition step, and an output step. The first acquisition step includes acquiring first person information (first image and voice) about a person present in the first common area E1. The second acquisition step includes acquiring second person information (second image and voice) about a person present in the second common area E2. The output step includes outputting information to one of the plurality of privately-owned areas E3 based on the first person information and the second person information. A program according to an aspect is designed to make a computer system perform the function of the intercom system 2000 described above or the method of processing the intercom system 2000.

The intercom system 2000 according to the present disclosure, or the agent that carries out the method of processing the intercom system 2000 according to the present disclosure includes a computer system. In that case, the computer system may include, as principal hardware components, a processor and a memory. The functions of the intercom system 2000 according to the present disclosure, or the agent that carries out the method of processing the intercom system 2000 according to the present disclosure may be performed by making the processor execute the program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a largescale integrated circuit (LSI). Those electronic circuits may be integrated together on a single chip or distributed on multiple chips without limitation. Those multiple chips may be integrated together in a single device or distributed in multiple devices without limitation.

### (Resume)

As can be seen from the foregoing description, an intercom system (2000) according to a first aspect is for use in a facility (5) including a plurality of privately-owned areas (E3), a first common area (E1), and a second common area (E2) provided in a passage leading from the first common area (E1) to the plurality of privately-owned areas (E3). The intercom system (2000) includes a first acquisition unit (2501), a second acquisition unit (2502), and an output unit (2504). The first acquisition unit (2501) acquires, in the first common area (E1), first person information about a person who is visiting the facility (5). The second acquisition unit (2502) acquires, in the second common area (E2), second person information about a person who is going to visit one of the plurality of privately-owned areas (E3). The output unit (2504) outputs, based on the first person information and the second person information, information about the privately-owned areas (E3).

This configuration allows for determining, based on the first person information and the second person information, whether or not the person identified by the first person information is identical with the person identified by the second person information. This allows the result to be output as information about the privately-owned area (E3), thus increasing the security against persons who are visiting the facility (5) including the first common area (E1), the second common area (E2), and the privately-owned areas (E3).

In an intercom system (2000) according to a second aspect, which may be implemented in conjunction with the first aspect, the information about the privately-owned area (E3) includes a notification to a user (resident) in the privately-owned area (E3).

This configuration allows the user to be notified, when a decision is made whether the person identified by the first person information is identical with the person identified by the second person information, of the decision.

In an intercom system (2000) according to a third aspect, which may be implemented in conjunction with the first or second aspect, the output unit (2504) outputs, as the information about the privately-owned area (E3), information about a call for the user in the privately-owned area (E3).

This configuration allows, when a decision is made whether the person identified by the first person information is identical with the person identified by the second person information, the call to be controlled depending on the decision.

An intercom system (2000) according to a fourth aspect, which may be implemented in conjunction with the third aspect, further includes an operating unit (2033) to be subjected to an operation of calling the user up. When the operating unit (2033) is subjected to a predetermined operation and when a result of comparison between the first person information and the second person information satisfies a predetermined condition, the output unit (2504) outputs information about the call for the user in the privately-owned area (E3).

This configuration allows, when the operating unit (2033) is subjected to a predetermined operation and when the result of comparison between the first person information and the second person information satisfies a predetermined condition, the intercom system (2000) to output information about the call for the user in the privately-owned area (E3).

In an intercom system (2000) according to a fifth aspect, which may be implemented in conjunction with any one of the first to fourth aspects, the output unit (2504) outputs, as the information about the privately-owned area (E3), information about locking or unlocking of an electric lock (2060) provided for the privately-owned area (E3).

This configuration allows unlocking of the electric lock (2060) to be controlled in accordance with the first person information and the second person information.

In an intercom system (2000) according to a sixth aspect, which may be implemented in conjunction with any one of the first to fifth aspects, the person information includes an image in which a person is shot.

This configuration allows the information about the privately-owned area (E3) to be output based on an image represented by the first person information (first image) and an image represented by the second person information (second image).

In an intercom system (2000) according to a seventh aspect, which may be implemented in conjunction with any one of the first to sixth aspects, the person information includes information about a human voice.

This configuration allows the information about the privately-owned area (E3) to be output based on the voice represented by the first person information and the voice represented by the second person information.

In an intercom system (2000) according to an eighth aspect, which may be implemented in conjunction with any one of the first to seventh aspects, the first acquisition unit (2501) acquires the first person information (such as the first image) from a lobby intercom station (2010) provided in the first common area (E1).

This configuration allows for acquiring the first person information from the lobby intercom station (2010).

In an intercom system (2000) according to a ninth aspect, which may be implemented in conjunction with any one of the first to eighth aspects, the second acquisition unit (2502) acquires the second person information from an intercom doorphone (intercom slave unit 2030) provided for a person who is going to visit the privately-owned area (E3) to call, from the second common area (E2), his or her designated resident in the privately-owned area (E3).

This configuration allows for acquiring the second person information from the intercom slave unit (2030).

In an intercom system (2000) according to a tenth aspect, which may be implemented in conjunction with the ninth aspect, the second acquisition unit (2502) acquires the second person information when the intercom doorphone receives a predetermined command.

This configuration allows for acquiring the second person information when the intercom doorphone receives a predetermined command (such as a press operation).

A processing method according to an eleventh aspect is applicable to an intercom system (2000) for use in a facility (5) including a plurality of privately-owned areas (E3), a first common area (E1), and a second common area (E2) provided in a passage leading from the first common area (E1) to the plurality of privately-owned areas (E3). The processing method includes a first acquisition step, a second acquisition step, and an output step. The first acquisition step includes acquiring first person information about a person who is present in the first common area (E1) and visiting the facility (5). The second acquisition step includes acquiring second person information about a person who is present in the second common area (E2) and going to visit one of the plurality of privately-owned areas (E3). The output step includes outputting information about the privately-owned area (E3) based on the first person information and the second person information.

This processing method increases the security against visitors to the facility (5), including the first common area (E1), the second common area (E2), and the privately-owned areas (E3).

A program according to a twelfth aspect is applicable to an intercom system (2000) for use in a facility (5) including a plurality of privately-owned areas (E3), a first common area (E1), and a second common area (E2) provided in a passage leading from the first common area (E1) to the plurality of privately-owned areas (E3). The program is designed to make a computer perform a first acquisition step, a second acquisition step, and an output step. The first acquisition step includes acquiring first person information about a person who is present in the first common area (E1) and visiting the facility (5). The second acquisition step includes acquiring second person information about a person who is present in the second common area (E2) and going to visit one of the plurality of privately-owned areas (E3). The output step includes outputting information about the privately-owned area (E3) based on the first person information and the second person information.

This program increases the security against visitors to the facility (5), including the first common area (E1), the second common area (E2), and the privately-owned areas (E3).

### Reference Signs List

- 1: Intercom System
- 5: Facility
- 10: Lobby Intercom Station (Intercom Doorphone)
- 11: Image Capturing Unit
- 14: Operating Unit
- 20: Intercom Master Station (Telecommunications Device)
- 30: Intercom Slave Unit (Intercom Doorphone)
- 50: Sensor Device (External Device)
- 60: Server (External Device)
- 101: First Setting Unit (Condition Setting Unit)
- 102: Second Setting Unit (Purpose Setting Unit)
- 103: Third Setting Unit (Destination Setting Unit)
- 104: Input Unit

## Claims

1. An intercom system (1) comprising
a condition setting unit configured to set at least one of a trigger condition for making an image capturing unit (11) of an intercom doorphone start capturing an image or a trigger condition for starting processing using the image captured by the image capturing unit (11).

2. The intercom system (1) of claim 1, further comprising
an input unit (104) configured to receive command information, wherein
the trigger conditions include at least one of whether or not the input unit (104) has received any command information or what type of command information the input unit (104) has received.

3. The intercom system (1) of claim 2, further comprising an operating unit (14), wherein
the command information includes information about a type of operation the operating unit (14) has been subjected to.

4. The intercom system (1) of claim 2 or 3, wherein
the input unit (104) is configured to receive, as the command information, information from an external device.

5. The intercom system (1) of any one of claims 1 to 4, further comprising
a purpose setting unit configured to set a purpose of using the image captured by the image capturing unit (11), wherein
the purpose setting unit is configured to select the purpose of using the image from a plurality of optional purposes including a first purpose of transmitting the image to a telecommunications device and a second purpose different from the first purpose.

6. The intercom system (1) of claim 5, wherein
the image captured by the image capturing unit (11) includes a shot of a person, and
the second purpose includes a purpose of authenticating the person shot in the image.

7. The intercom system (1) of any one of claims 1 to 6, further comprising
a transmission destination setting unit configured to set a destination to which the image captured by the image capturing unit (11) is to be transmitted, wherein
the transmission destination setting unit is configured to select the destination from a plurality of potential destinations including telecommunications devices and external devices.
